# EUROPEAN PATENT SPECIFICATION

(11) **EP 1 793 663 B1**
(45) Date of publication and mention of the grant of the patent: **11.02.2009**
(21) Application number: 05740594.6
(22) Date of filing: 20.05.2005
(51) Int. Cl.: A01K 13/00

(54) **GUARD FOR AN ANIMAL'S TAIL**
SCHUTZ FÜR EINEN TIERSCHWANZ
DISPOSITIF DE PROTECTION POUR QUEUE D'ANIMAL

(30) Priority: 20.05.2004 IE 20040353
(43) Date of publication of application: 13.06.2007
(73) Proprietor: Mooney, Patrick Roy, Dublin 6 (IE); Mooney, Darragh, Blackrock, County Dublin (IE); Mooney, Jennifer, Rathfarnham, Dublin 14 (IE); Fitzgibbon, Adrian, Dublin 6 (IE); McPoland, Tony, Dublin 14 (IE)
(72) Inventor: Mooney, Patrick Roy, Dublin 6 (IE); Mooney, Darragh, Blackrock, County Dublin (IE); Mooney, Jennifer, Rathfarnham, Dublin 14 (IE); Fitzgibbon, Adrian, Dublin 6 (IE); McPoland, Tony, Dublin 14 (IE)
(74) Representative: McCarthy, Denis Alexis
(86) International application number: PCT/IE2005/000058
(87) International publication number: WO 2005/112617

(56) References cited:
- US-A- 1 904 635

## Description

The present invention relates to guards for animal tails and in particular to guards for use on a raised bedding area such as those used for housing bovine animals, where the raised bedding area has an adjacent area onto which animal waste is deposited.

In modem milking systems, dairy cows are wintered indoors in what is commonly known as a loose housing system. In some countries, the modem intensive trend in dairy farming is for all year housing. The loose housing system requires the use of bedding cubicles for the cows to lie down on. Defecation and urination generally take place in the walking area of the housing. The walking area consists of a floor which generally comprises either a slatted floor including a series of slats allowing the waste to drop down into a collection pit underneath the floor, or the floor consists of a solid concrete floor which is mechanically scraped to remove the waste. Even if the floor is the slatted floor type, the surfaces of the slats themselves are practically always covered with a animal waste material of animal faeces and urine. Thus in either case, the floor is always considerably soiled, especially in the area directly below the raised bed cubicle.

The trend is that most cubicles today are fitted with cow mats or cow mattresses (referred to hereafter as "mats") and cubicle hygiene is critically important because when a cow is lying down, her udder and teats are in contact with the mat. Extremely high standards of milk quality is demanded from dairy farmers to safeguard public health. Significant financial penalties are imposed if a milk test shows levels of bacteria resulting from faecal contamination in the milk. When standing or lying in the cubicle, a cow will defecate and it is important that the cow dung is naturally expelled into the walking area, not in the cubicle bedding area itself. Modem cubicles are designed to facilitate this by restricting the cow from lying far forward in the cubicle; ideally the anus should be above or over the edge of the cubicle so that faeces and urine will flow into the walking area.

This situation presents a problem because the nearer an animal's rear is to the edge of the cubicle bedding area, the more likely it is that the animal's tail will be resting in the animal waste material on the soiled walkway. This obviously means that the cow's tail ends up covered and matted with faecal matter. Over time, this matter becomes dried in and entangled with the tail. This is not only uncomfortable for the cow but also for the dairy farmer because as he is milking the cows in a milking shed in which the farmer stands in a pit with the cows standing in raised milking stalls, the farmer can often be struck by a cow's swinging tail swung by a cow as he stands close to the cow during the milking process. Being struck by a dirty tail is both unpleasant and unhygienic for the farmer. As well as that, there may be transfer of faecal matter from the soiled tail onto equipment in the milking shed. This can result in contamination of the milking machinery and bacteria in the milk which has public health risks. Furthermore, flies are attracted to the dung on the cow's tail; the flies are likely to lay eggs and maggot infection can result in serious health problems for the cow. This filthy state of the cow's tail could result in disease in the cow such as mastitis, if the dirt is transferred onto the cow's udder and teats and this can easily happen if the tail is long and comes into contact with the udder and teats when the cow swings her tail. Also, there is the danger of other cows standing on a cow's tail when the tail is lying in the walkway. Any damage to a cow's tail can also result in the cow not showing or coming into heat.

Document US-A-1 904 635 discloses a cow tail hanger for keeping a cow's tail free from fifth.

The present invention seeks to alleviate the problems identified above.

The present invention according to claim 1 provides a guard for an animal's tail for use on a raised bedding area, the guard having at least one tail supporting member adapted for holding an animal's tail out of contact with animal waste material adjacent the raised bedding area, thereby generally preventing the animal's tail from becoming soiled, the tail supporting member being moveable between a storage position and an in-use position in which the tail supporting member supports the animal's tail, the tail guard also comprising means for moving the at least one tail supporting member between the storage position and the in-use position, whereby when an animal lies down on the bedding area, the tail supporting member is moved into the in-use position and when an animal stands up, the tail supporting member is moved into the storage position.

In both the storage and the in-use positions, the tail guard has the advantage that it does not interfere with the action of mechanical scraping apparatus used for scraping animal waste material from the walking area adjacent the cubicle.

Conveniently, in the in-use position, the tail supporting member may be co-planar with the plane of the bedding area but could exceed or be considerably less than co-planar.

Conveniently, the means for moving the tail supporting member comprises a fulcrum and lever for causing pivotal movement of the tail supporting member about the fulcrum.

In one embodiment, the tail guard is substantially "L-shaped" in cross-section with one limb of the substantially "L" shaped profile being adapted for a bovine animal to exert its weight thereon and the other limb defining the at least one tail supporting member.

Advantageously, at least a portion of the lever is included in the long limb of the "L" shaped profile whereby the weight of the animal lying down in the cubicle activates the lever and causes the at least one tail supporting member to pivot into the in-use position.

Conveniently, the lever may be in the form of an enclosed channel or pipe included in the longer limb of the "L"-shaped tail guard. Alternatively, wire is provided to carry an electric current to a motor unit to power the movement of the tail supporting member between the storage position and the in-use position.

In a further alternative construction, the tail guard may comprise a relatively rigid elongate strip of material functioning as the lever with the remainder of the tail guard being manufactured from relatively flexible material.

Ideally, the tail supporting member(s) of the tail guard are adapted to reduce all friction and resistance to facilitate the passage of animal waste through the tail guard.

Preferably, the tail supporting member is in the form of a tail supporting finger and ideally, the tail supporting member comprises a plurality of tail supporting fingers.

The tail supporting finger(s) may be pivotably moveable between the storage position and the in-use position.

The means for moving the tail supporting member between the storage position and the in-use position optionally comprises a lever pivotably moveable along a pivot axis about a pivot point.

Conveniently, the lever may be connected to a bracket head on which the at least one tail supporting member is fixedly mounted.

The bracket head ideally has a rod fixedly mounted thereon and the at least one tail supporting member is fixedly mounted on the rod.

The lever is advantageously pivotably connected to the bracket head such that when the lever is activated, the bracket head is forced to pivot and thereby moves the at least one tail supporting member between the storage position and the in-use position.

The tail guard may include a housing, the lever being pivotably connected to rear end of the housing and the bracket head being pivotably connected to the front end of the housing.

In one embodiment, the means for moving the at least one tail supporting member between the storage position and the in-use position comprises a rack and pinion arrangement.

Advantageously, the or each tail supporting member includes a pinion mounted at one end thereof.

The tail guard may include at least one supporting limb on which is mounted at least one rack, such that the pinion provided on the or each tail supporting member is moveable along the at least one rack.

Preferably, the tail guard includes a plurality of tail supporting members, each tail supporting member having a pinion mounted thereon, the tail guard also including a corresponding plurality of racks, mounted on the at least one support limb, each pinion being adapted for movement along each respective rack.

Ideally, linkage means are provided connecting the lever to the support limb, whereby on activation of the lever by an animal lying in the area around the lever, the support limb is forced to be moved laterally, resulting in movement of the support limb and movement of the or each rack, thereby causing the pinion to move along the rack and resulting in movement of the tail supporting member between the storage position and the in-use position.

Conveniently, the linkage means connecting the lever to the support limb comprises a linkage beam, the linkage beam having at least one pin engageable in at least one slot provided on the support limb. The pin is moveable within the slot so that when the lever is activated, the linkage beam is forced to move, thereby causing movement of the at least one pin in the slot.

Advantageously, the movement of the pin in the slot of the support limb results in lateral movement of the support limb and corresponding movement of the rack.

The lever is ideally fixedly connected to one end of the linkage beam.

Preferably, the slot is provided at a 45° angle to the horizontal.

In one embodiment, the means for moving the at least one tail supporting member between the storage position and the in-use position comprises a cam arrangement.

Preferably, the or each tail supporting member includes a cam provided at one end thereof.

Ideally, the tail guard includes at least one supporting limb having means for connection of the supporting limb to the or each cam so that lateral movement of the supporting limb results in arcuate movement of the cam.

Advantageously, the tail guard comprises a plurality of tail supporting members, each tail supporting member having a cam fixedly mounted thereto so that arcuate movement of the cam results in movement of the tail supporting members between the storage position and the in-use position.

Conveniently, the tail guard includes linkage means connecting the lever to the or each cam and the linkage means includes a support limb to which the or each cam is connected by at least one cam arm.

The linkage means may further include a linkage beam, the linkage beam having at least one pin engageable in a slot provided on the support limb.

In this embodiment, the pin is moveable within the slot so that when the lever is activated, the linkage beam is forced to move, thereby causing movement of the at least one pin in the slot.

Preferably, movement of the pin in the slot of the support limb results in lateral movement of the support limb and corresponding movement of the cam arms and the cam, thereby resulting in movement of the tail supporting members between the storage position and the in-use position.

Ideally, the at least one slot is provided in the support limb at a 45° angle to the horizontal.

Conveniently, the means for moving the at least one tail supporting member between the storage position and the in-use position comprises linkage means connecting the lever to a support limb having means for transferring movement of the support limb to the at least one tail supporting member so as to cause movement thereof.

The linkage means may comprise a linkage beam fixedly connected at one end thereof to the lever such that activation of the lever causes movement of the linkage beam, the linkage beam having at least one pin provided towards other end thereof, the at least one pin being slideably engageable in at least one corresponding slot provided in the support limb, whereby movement of the linkage beam causes movement of the support limb.

In one embodiment, the means for transferring movement comprises a rack and pinion arrangement.

Alternatively, the means for transferring movement comprises a cam arrangement.

Preferably, the tail guard comprises biaising means for biaising the tail supporting members into the storage position having been in the in-use position.

Advantageously, the biaising means are provided in association with the lever.

The guards for animal tails of the present invention will now be described more particularly by way of example only, with reference to the accompanying drawings in which are shown several embodiments of the bovine animal tail guards of the invention.

In the drawings:
Figure 1 is a perspective view of an individual cubicle without the tail guard mounted thereon;
Figure 2 is a perspective view of a first embodiment of a tail guard in accordance with the present invention;
Figure 3 is a perspective view of the tail guard of Figure 2 shown before being mounted on a raised bed cubicle;
Figure 4 is a perspective view of a tail guard in a second embodiment with two tail supporting members, each having a channel section;
Figure 5(a) is a perspective view of a third embodiment of a tail guard in accordance with the present invention, including a plurality of tail supporting members in the form of hooks;
Figure 5(b) is an exploded view of the tail guard of Figure 5(a) showing an enlarged view of one of the tail receiving hook members which will allow manure, urine and animal waste to pass through the tail guard
Figure 6(a) is a perspective view of a tail guard in a fourth embodiment indicated generally by reference numeral 40. The tail guard 40 is shown overlaid by a cow mat 48. The tail guard 40 includes a plurality of tail supporting members in the form of flexible or hingedly moveable fingers which will allow manure, urine and animal waste to pass through the tail guard.
Figure 6(b) is an exploded view of one of the fingers of the tail guard shown in Figure 6(a);
Figure 7 is a side view of a tail guard in the first, second or third embodiments respectively showing the positions of the tail guard in the out of use or (storage) position and in the use position (shown in dotted lines);
Figure 8 is a side view of an alternative embodiment of tail guard in accordance with the invention showing the tail supporting member of the tail guard in the storage position and the in-use position (shown in dotted lines);
Figure 9(a) is a side view of a tail guard showing the fulcrum about which the tail supporting member is pivotably moveable and including the rigid tube or pipe or a rigid tube or pipe filled with air or liquid which functions as a lever;
Figure 9(b) is a side view of the tail guard of Figure 9(a) mounted on the raised bedding area of the cubicle;
Figure 10(a) is a side view of an alternative embodiment of tail guard showing the fulcrum about which the tail supporting member is pivotably moveable and the rigid tube or pipe filled with air or a wire to an electrical power source;
Figure 10(b) is a side view of the tail guard of Figure 10(a) mounted on the raised bedding area of the cubicle;
Figure 11 is an alternative embodiment of a tail guard in accordance with the present invention;
Figure 12(a) is a side view of an alternative embodiment of tail guard showing the fulcrum about which the tail supporting member is pivotably moveable and the rigid tube or pipe filled with air or a wire rod which functions as a lever;
Figure 12(b) is a side view of the tail guard of Figure 12(a) mounted on the raised bedding area of the cubicle;
Figure 13(a) is a side view of a further alternative embodiment of tail guard showing the fulcrum about which the tail supporting member is pivotably moveable and the rigid tube or pipe filled with air or a wire rod which functions as a lever;
Figure 13(b) is a side view of the tail guard of Figure 13(a) mounted on the raised bedding area of the cubicle;
Figure 14 is a side view of a currently preferred embodiment of tail guard showing the fulcrum about which the tail supporting member is pivotably moveable and the rigid tube or pipe filled with air or a wire rod which functions as a lever;
Figure 15 is a perspective view of an alternative embodiment of tail guard in accordance with the invention with the tail guard shown in the storage position;
Figure 16 is a perspective view of the tail guard of Figure 15 with the tail guard shown in the in-use position;
Figure 17 is a side view of the tail guard shown in Figure 15 (tail guard in storage position);
Figure 18 is a side view of the tail guard shown in Figure 16 (tail guard in the in-use position);
Figure 19 is a front view of the tail guard shown in Figure 15;
Figure 20 is a plan view of the tail guard shown in Figure 15 (tail guard in the storage position);
Figure 21 is a plan view of the tail guard shown in Figure 16 (tail guard in the in-use position);
Figure 22 is a rear perspective view of the tail guard shown in Figure 15;
Figure 23 is a perspective view of a further alternative embodiment of tail guard in accordance with the invention with the tail guard shown in the storage position;
Figure 24 is a perspective view of the tail guard of Figure 23 with the tail guard shown in the in use position;
Figure 25 is a plan view of the tail guard of Figure 24 (in-use position shown);
Figure 26 is a perspective view of the tail guard shown in Figure 23 but with the cover removed to show the detail of the means for moving the tail supporting members between the storage position and the in-use position;
Figure 27 is plan view of the tail guard of Figure 24 (storage position);
Figure 28 is a plan view of the tail guard of Figure 23 (storage position);
Figure 29 is a side view of the tail guard of Figure 24 (in-use position);
Figure 30 is a front view of the tail guard of Figure 23 (storage position);
Figure 31 is a front view of the tail guard of Figure 24 (in-use position);
Figure 32 is a detailed exploded plan view of the portion of the tail guard encircled within area B of Figure 26 (storage position);
Figure 33 is a side sectional view of the actuation lever of the tail guard of Figure 23 (the tail guard is in the storage position);
Figure 34 is a detailed exploded plan view of the same portion of the tail guard as shown in Figure 32 but with the tail supporting members in the in-use position;
Figure 35 is a side sectional view of the actuation lever of the tail guard of Figure 24 (in-use position);
Figure 35a is a perspective view of the tail guard of Figure 23 (in-use position);
Figure 36 is a perspective view of a further alternative embodiment which is the preferred embodiment of the tail guard in accordance with the present invention with the tail guard shown in the in-use position (the cover of the tail guard is not shown in the drawing);
Figure 37 is a perspective view of the tail guard of Figure 37 but with the tail guard in the storage position;
Figure 38 is a plan view of the tail guard shown in Figure 36;
Figure 39 is a plan view of the tail guard shown in Figure 37;
Figure 40 is a plan view of the tail guard shown in Figure 37 but with the cover in place so that the means for moving the tail supporting members between the storage and the in-use positions is not shown;
Figure 41 is a plan view similar to that of Figure 40;
Figure 42 is a plan view of the cam arrangement for transferring the force causing actuation of the lever to the tail supporting members so as to cause movement thereof between the storage and the in-use positions;
Figure 43 is a further plan view of the cam arrangement shown in Figure 42 with the cam now having turned through an arc thereby causing movement of the tail supporting members between the storage and the in-use positions;
Figure 44 is a exploded side view of the actuation lever in the storage position;
Figure 45 is an exploded side view of the actuation lever after it has been forced downwardly under the force of a cow's weight when a cow is lying on a cow mat placed on top of the tail guard;
Figure 46 is a side view of the tail guard in the storage position;
Figure 47 is a perspective view of the tail guard of Figure 46;
Figure 48 is a perspective view of the tail guard in the in-use position;
Figure 49 is a detailed side view of the cam arrangement with the tail supporting members in the storage position; and
Figure 50 is detailed side view of the cam arrangement with the tail supporting members in the in-use position.

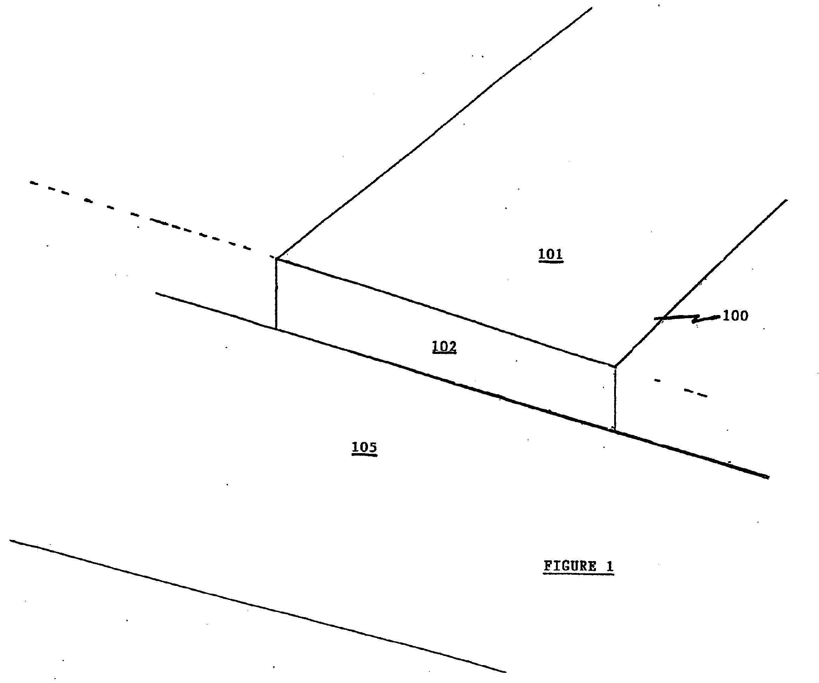

Referring to the drawings, Figure 1 is a perspective view of an individual cubicle indicated generally by numeral 100 having a raised bedding area 101 on which a bovine animal, for instance a cow, may lie down. In the plane perpendicular to the plane of the bedding area 101, is a side wall 102. A walking area on which the animals may walk is indicated generally by reference numeral 105 and it is area onto which, faeces and urine are deposited.

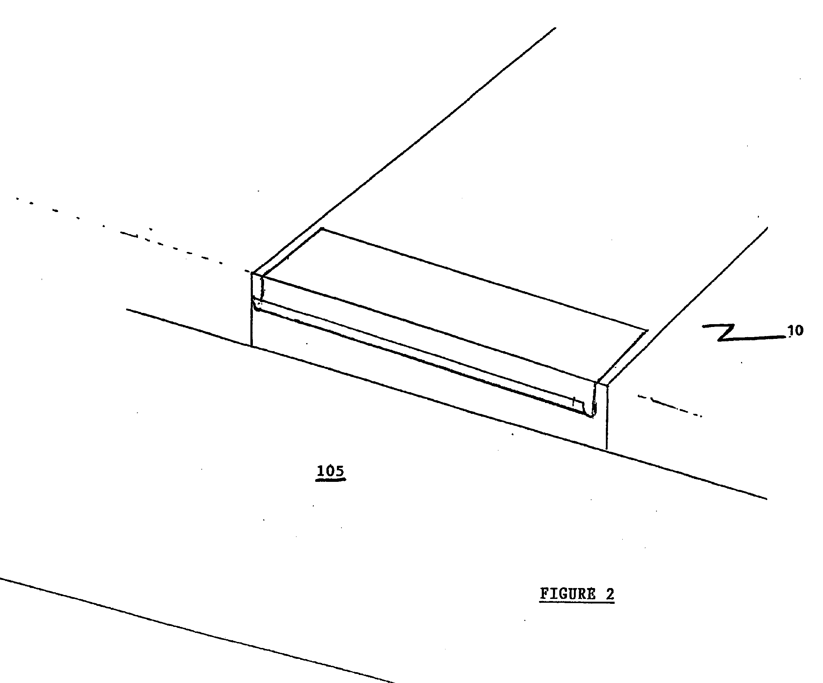

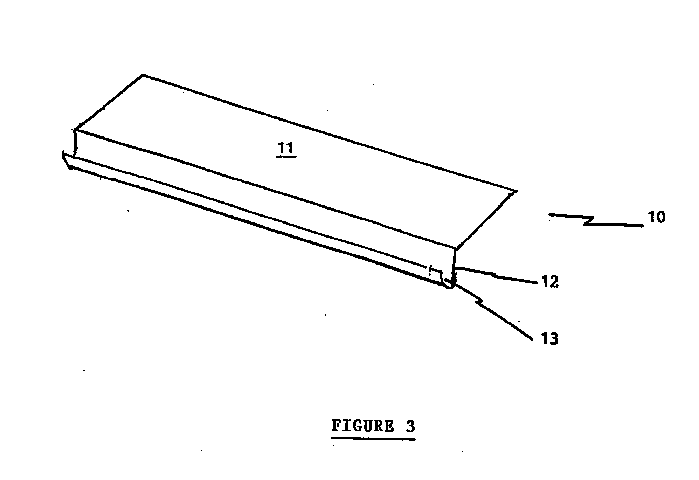

Referring now to Figure 2 and 3, a first embodiment of the tail guard is indicated generally by reference number 10 and is shown mounted on a cubicle. The tail guard 10 has a generally "L" - shaped cross-sectional profile with the longer limb of the "L" - shape providing the panel 11 on which an animal may lie down. Alternatively, a cow mat of known type may be placed on top of the panel 11 along the side remote from the tail supporting member and the animal may lie directly onto the mat, with the weight of the animal being transferred through the mat to the panel 11. The animal's weight thus exerts a downward force on the panel 11 of the tail guard 10. This results in the tail supporting member 12 being pivotably moved upwardly into the in-use position in which the tail supporting member 12 is lying substantially co-planar with the plane of the panel 11. The tail guard 10 also includes a channel 13 defined by the hook-like profile along the end of the tail supporting member 12. With the tail supporting member 12 in the in-use position, the tail of an animal lying in the cubicle will be supported in the tail supporting member 12 and the tail will be prevented, by the channel 13, from dangling down into the slurry on the walkway. Channel 13 is perforated to allow all animal waste to pass through the tail guard 10 with the minimum resistance possible.

In the following description of each of the embodiments of the tail guard of the invention, like numerals will be used to describe like features.

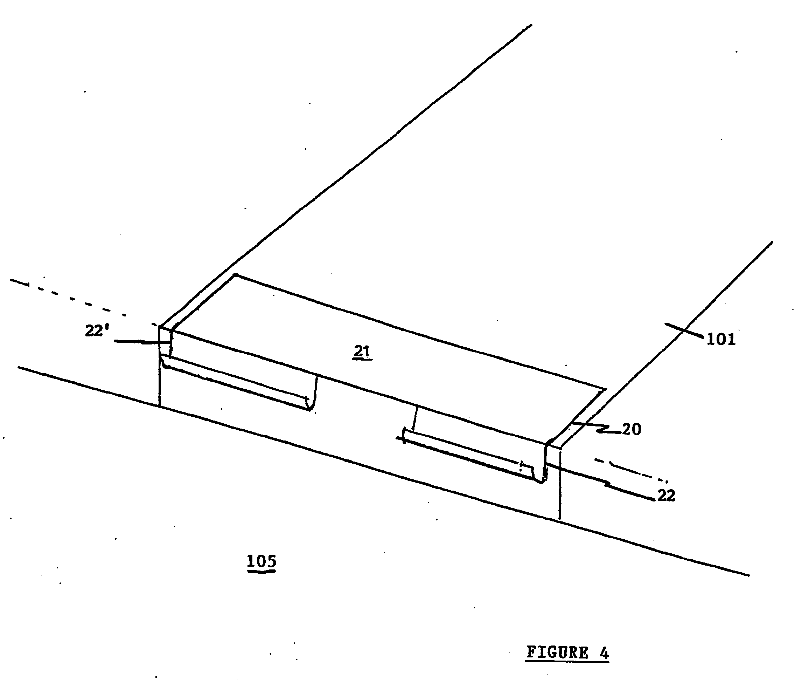

Referring now to Figure 4, a tail guard in a second embodiment is shown and is indicated generally by reference numeral 20. The tail guard 20 includes a panel 21 and two tail supporting members 22, 22' having a gap therebetween. The tail guard 20 has similar features and operates in a similar way to the tail guard 10. The tail supporting members are segmented (i.e. have a gap therebetween) to allow all animal waste to pass through the tail guard 20 with the minimum resistance possible. Alternatively, the tail supporting members may be perforated (not shown in drawings) to allow waste to pass through.

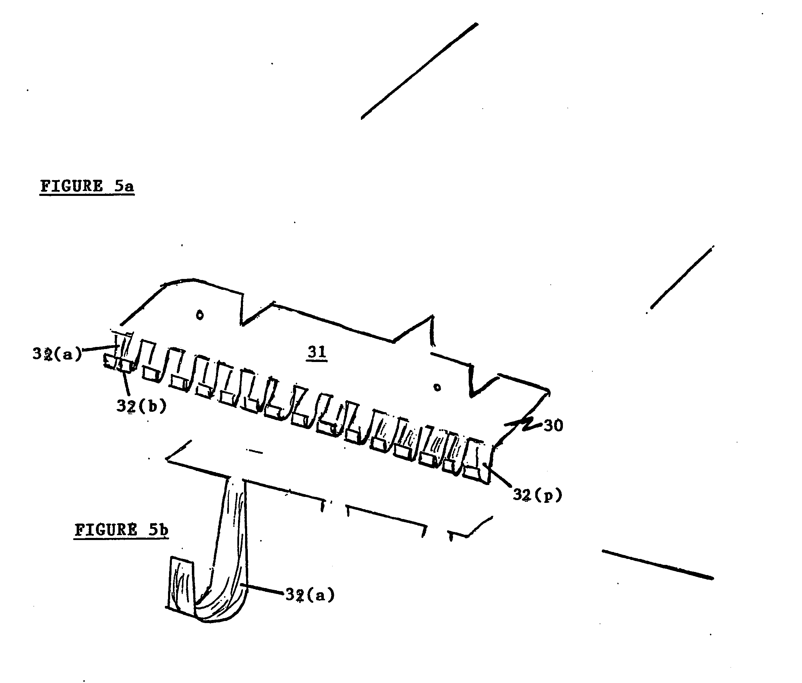

Referring now to Figures 5(a) and 5(b), a tail guard in a third embodiment is shown indicated generally by reference numeral 30. The tail guard 30 includes a panel 31 and a lever 35. The tail guard also includes a plurality of tail supporting members in the form of hooks 32(a) through to 32(p). As in the first and second embodiments, when the cow lies down and exerts a downward force on the panel 31, the plurality of tail supporting members in the form of hook 32(a) through to 32(p) are pivoted upwardly to receive and support the animal's tail so that it is not in contact with the animal waste material in the walkway 105.

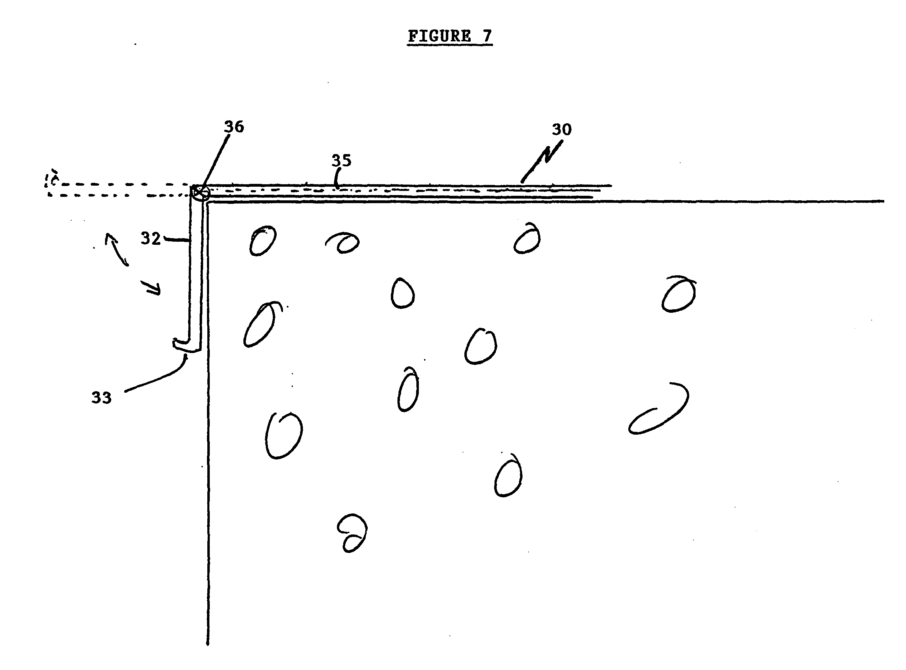

Referring now to Figure 7, the operation of the tail guard 30 will be described. The in-use and storage positions of the tail guard 30 are shown in Figure 7 with the in use position shown in dotted lines.

When the animal lies down, the animal exerts a downward force on panel 31 which includes lever 35. This downward force on the lever 35 causes the tail supporting member 32 to be pivoted upwardly about pivot point 36 to the position shown in dotted lines in Figure 7. However, this position can be lesser or greater than that shown in the drawing. The tail supporting members 32(a) through to 32(p) are held in the in-use position under action of the downward force on the lever (provided by channel 35). Thus, the tail supporting members 32a to 32(p) are held in the in-use position for as long as the cow is lying down. When she stands up, the tail supporting fingers pivot downwardly into the storage position where they do not impede scraping of the walkway by mechanical scrapers.

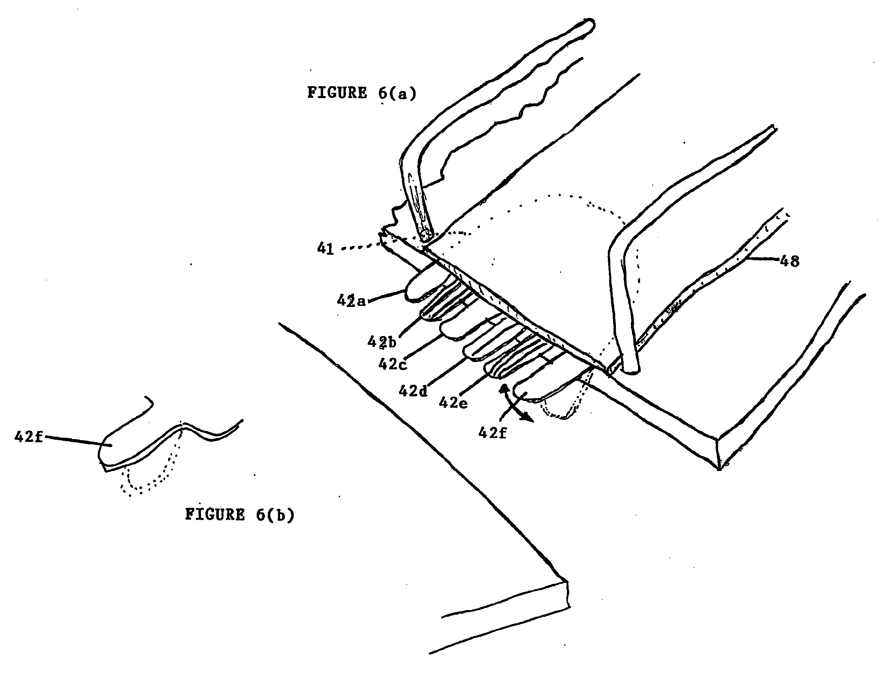

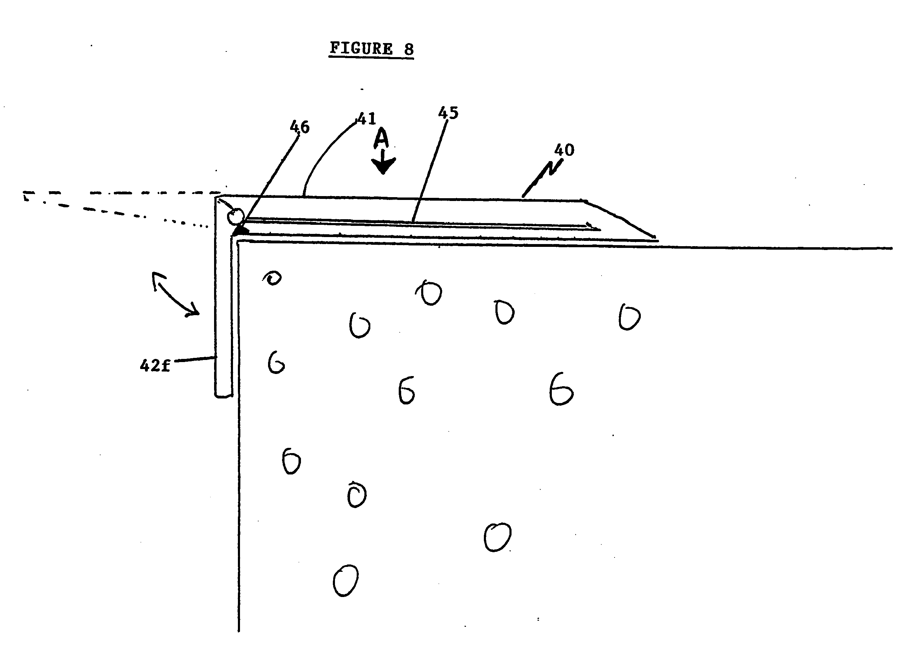

Referring now to Figures 8, 6(a) and 6(b), a tail guard in a fourth embodiment is indicated generally by reference numeral 40. The tail guard 40 may have a cow mat (not shown) placed over it. Thus, if a cow lies on the mat, her weight bears down in the region around the lever and the lever will be activated. The tail guard 40 includes a plurality of tail supporting members in the form of flexible or hingedly moveable fingers (only one of which is shown, namely 42(f). The fingers (42f) are designed to allow all animal waste to pass through the tail guard 40 with the minimum resistance possible.

Referring now to Figure 8, the operation of the tail guard 40 will be described. The tail guard 40 is shown in Figure 8 with the tail supporting finger 42(f) shown in the storage position and shown in dotted lines in the in-use position. The tail guard 40 includes a lever provided by an enclosed channel 45 which contains fluid or a gel. A fulcrum (pivot point) 46 is also included in the tail guard 40. When the cow lies down on panel 41 and exerts a downward force as indicated by arrow A, the tail supporting finger 42(f) together with the other tail supporting fingers (not shown in Figure 8) are pivoted upwardly about the fulcrum 46 into the in-use position in which the tail supporting member is co-planar with the panel 41 and is capable of supporting and holding the tail out of contact with the animal waste material in the walkway 105 adjacent the raised bedding area. The tail supporting members (only member 42(f) is shown) are held in the in-use position under action of the downward force on the lever (i.e. the channel 45). Thus, the tail supporting members are held in the in-use position for as long as the cow is lying down on the lever. When she stands up, the tail supporting fingers pivot downwardly into the storage position where it does not impede scraping of the walkway by mechanical scrapers.

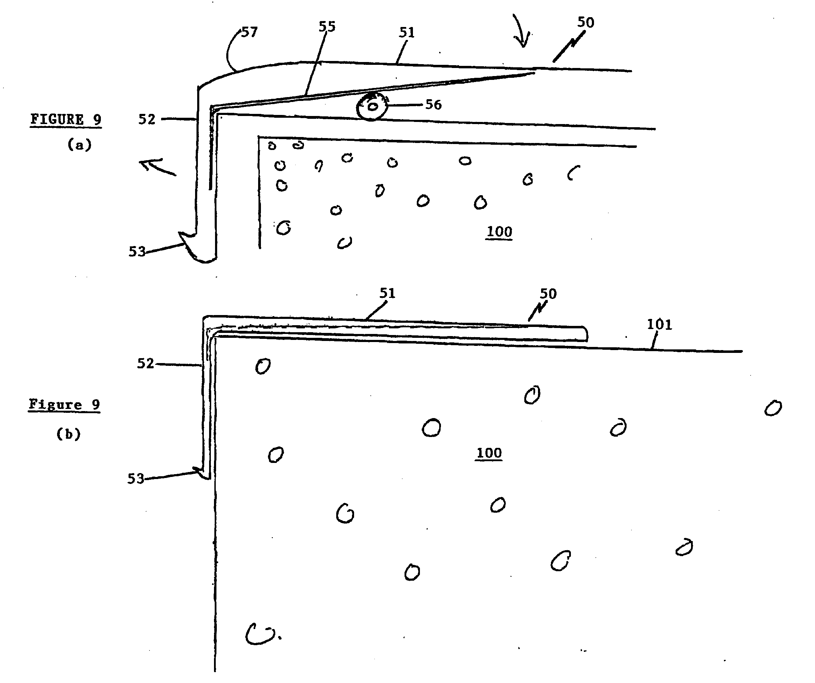

In Figures 9(a) and (b), an alternative embodiment of tail guard is shown, indicated generally by reference numeral 50. The tail guard 50 includes panel 51 on which a cow's weight bears down when she lies down in her cubicle, a lever 55 comprising a channel or pipe, a fulcrum 56 and a tapered section 57. The tail guard 50 operates in the same manner as described above in relation to Figure 7 (tail guard 30) and Figure 8 (tail guard 40).

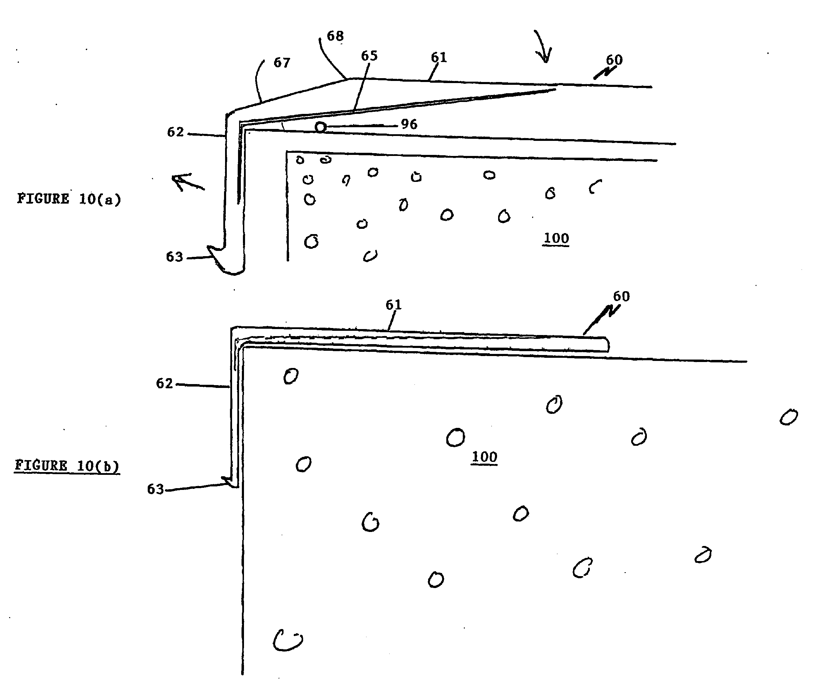

Referring now to Figures 10(a) and 10(b), a tail guard in an alternative embodiment of tail guard is indicated generally by reference numeral 60. The tail guard 60 includes tail supporting member 62 with hook member 63. The tail guard 60 comprises a fulcrum 96 and a lever 65 defined by a rigid bar, rigid channel or rigid pipe 65. The tail guard 60 includes a ramp (angled) section 67 leading to an apex 68 on the upper surface 61 of the tail guard. When the cow lies down in her cubicle, a downward force indicated by arrow B is exerted on the lever 65. Lever 65 is pressed downwardly so that it comes into contact with fulcrum 96 and the tail supporting member 62 is therefore urged upwardly under the pivot action about the fulcrum 96 and the tail supporting member 62 assumes the in-use position. The tail guard 60 thus operates and is used in the same way as described in relation to Figure 7 (tail guard 30) and Figure 8 (tail guard 40).

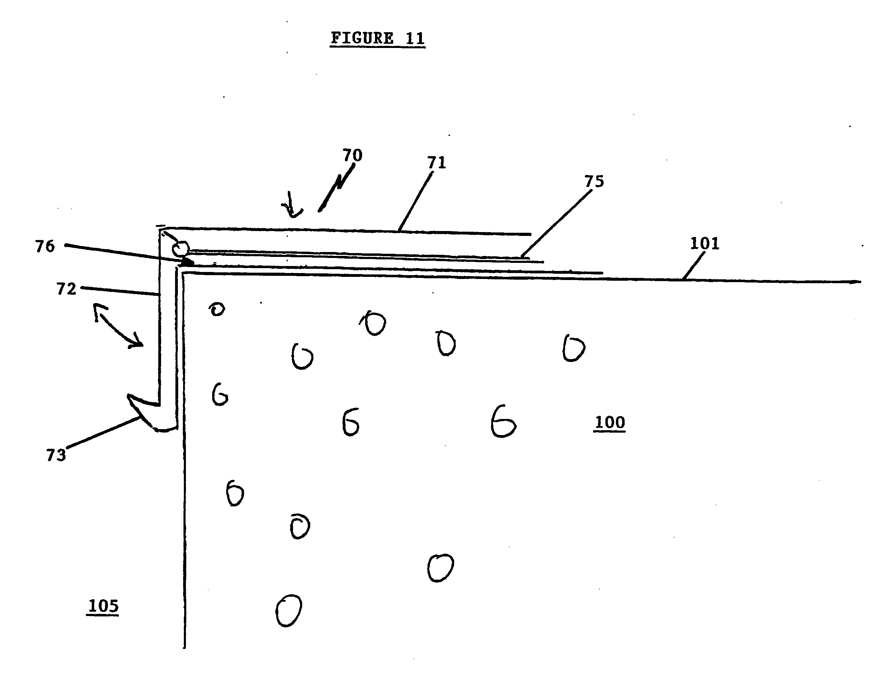

In Figure 11 is shown an alternative embodiment of tail guard indicated by generally reference numeral 70. The tail guard 70 includes a lever 75 comprised of a tube or pipe with fluid or alternatively the lever may be controlled by a wire to an electric motor. A fulcrum 76 is also included. The tail guard 70 operates in the same way as described in relation to tail guard 30 shown in Figure 7 and tail guard 40 shown in Figure 8.

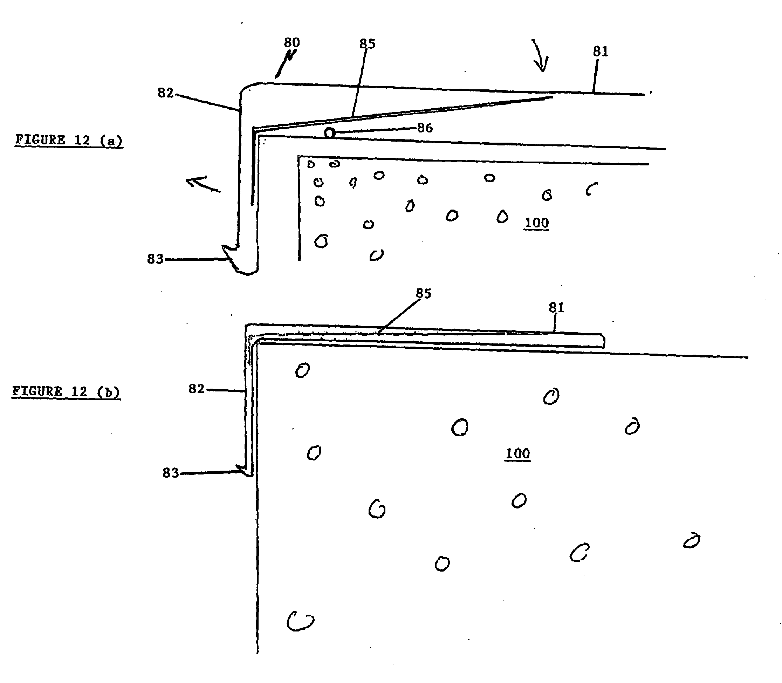

Referring now to Figures 12(a) and 12(b), a tail guard in a further alternative embodiment is shown and is generally indicated by reference 80. The tail guard 80 includes lever 85 comprising a rigid channel or tube filled with fluid. Alternatively, the lever 85 may consist of a wire 85. The tail guard 80 includes a fulcrum 86. The tail guard 80 operates in the same manner as described in relation to tail guard 30 shown in Figure 7 and tail guard 40 shown in Figure 8.

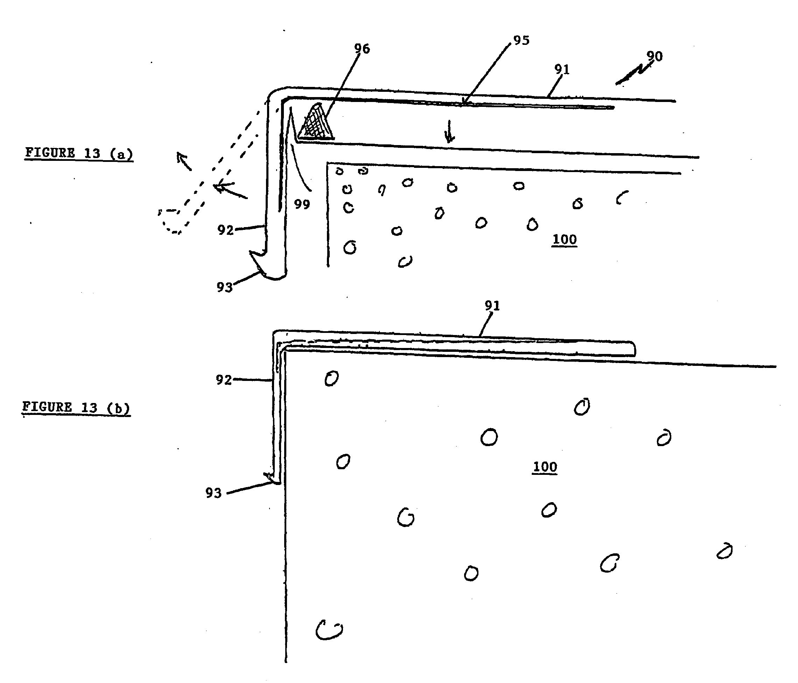

An alternative embodiment of tail guard in accordance with the present invention is shown in Figures 13(a) and (b) and is indicated generally by reference numeral 90. The tail guard 90 includes lever 95 comprising a rigid channel or tube filled with fluid. A fulcrum 96 is also included and consists of a rigid piece of material. Optionally, a notch 99 is provided in the underside of the tail guard 90. The notch 99 may not be required in certain applications. The tail guard 90 operates in the same manner as described in relation to tail guard 30 shown in Figure 7 and tail guard 40 shown in Figure 8.

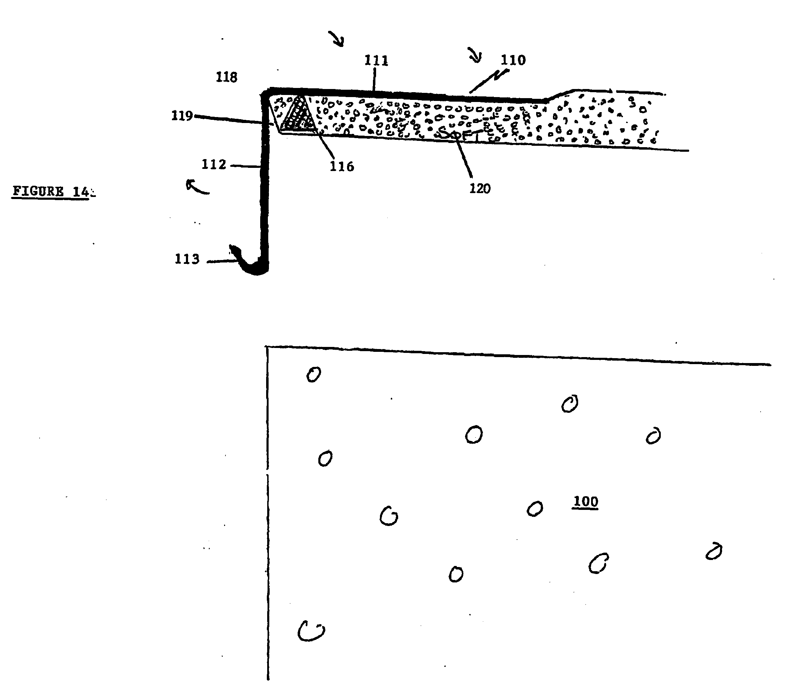

Referring now to Figure 14, a further alternative embodiment of tail guard is shown and is generally indicated by reference numeral 110. The tail guard 110 comprises a fulcrum 116 which comprises a relatively rigid layer of material while the remainder of the tail guard 110 is manufactured from a semi-rigid polymeric material such as polyurethane (PU) or polyvinyl Acetate (PVA) polymer. The tail guard 110 operates in the same manner as described in relation to tail guard 30 shown in Figure 7 and tail guard 40 shown in Figure 8. Ideally, the tail guard 110 is provided with a segment 118 which is made of different material than the main bulk 120. The segment 118 is preferably made of a material with a high return elasticity rating so as to return to its original dimensions whereas the main bulk 120 is made of a material with a high compressibility compression set rating so as to return to its original thickness. Depending on the performance of the material of the segment 118, the segment may be extended into the notch 119.

In a further modification not shown in the drawings, the tail guard may be fixed directly to the riser of the step up to the bedding area. The tail guard is not limited to being substantially L-shaped.

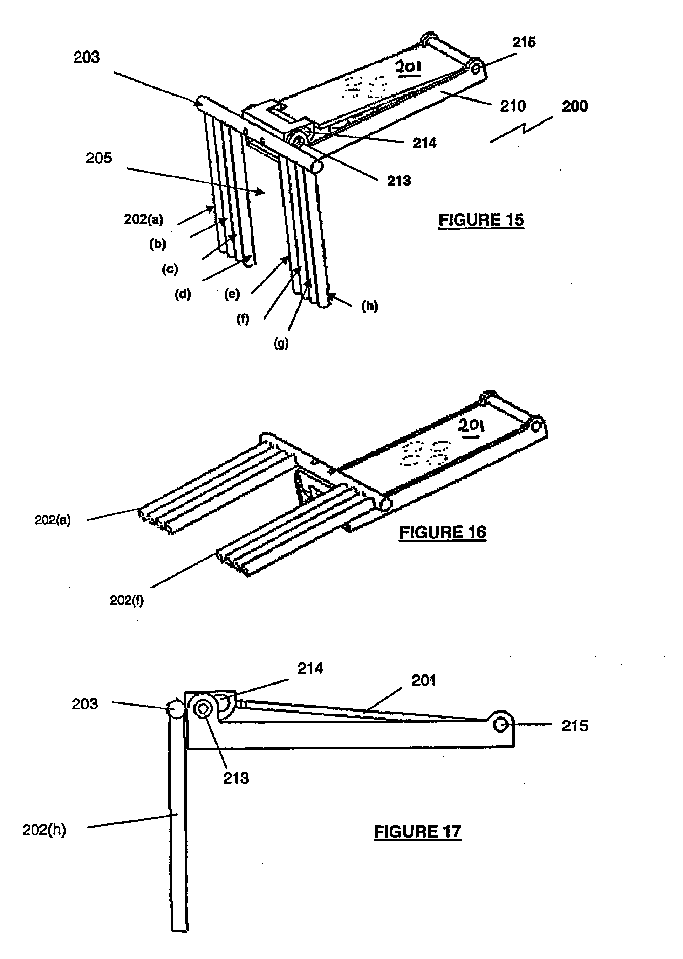

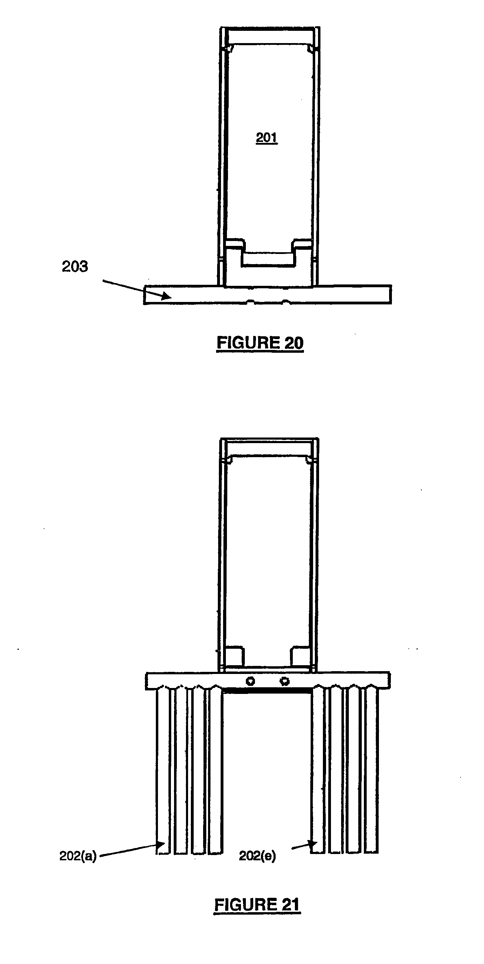

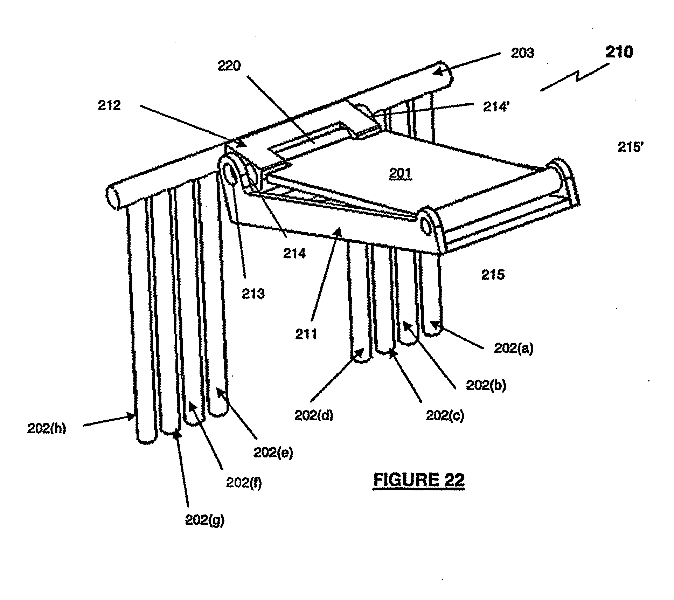

Referring now to Figures 15 to 22 inclusive, a further embodiment of a tail guard in accordance with the invention will be described. The tail guard is indicated generally by reference numeral 200. The tail guard 200 includes a plurality of tail supporting members in the form of fingers 202(a) through to 202(h) which are fixedly mounted on a rod 203. The tail supporting members 202(a) to 202(d) are located in abutment with each other. Similarly, tail supporting members 202(e) to 202(h) are located in abutment with each other. A gap 205 is provided between the first group of tail supporting members 202(a) to 202(d) and the second group of tail supporting members 202(e) to 202(h).

The tail guard 200 also includes a lever member indicated generally by reference numeral 210. The lever member 210 includes a panel 201 which functions as a lever. The lever member 210 also includes a housing 211 and a bracket head 212.

The rod 203 carrying the tail supporting members 202(a) to 202(h) is fixedly mounted to the bracket head 212. The bracket head 212 is pivotably moveable along a pivot axis provided by pin 220 so that the bracket head 212 is pivotable about pivot point 213.

The panel 201 is pivotably connected to the housing 211 at pivot points 215, 215' and the panel 201 is pivotably connected to the bracket head 212 at pivot points 214, 214'. Thus, the panel 201 is pivotably moveable along two pivot axes, namely the pivot axes about pivot points 214, 214' and 215, 215', respectively.

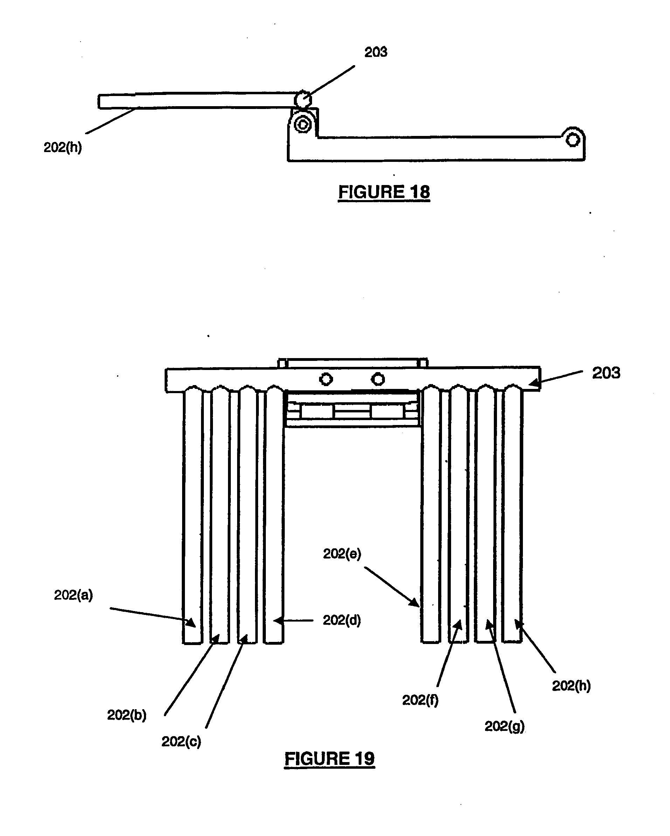

The use of the tail guard 200 will now be described. The tail guard 200 is positioned on a raised bed cubicle area with the tail supporting members 202(a) through to 202(h) located overhanging the front face of the step up to the raised bed cubicle and with the lever member 210 located underneath a cow mat in the cubicle. The tail guard 200 is initially in the storage position as shown in Figure 15. When a cow enters the cubicle and lies down, her weight bears down on the cow mat in the area of the lever member 210. The force of the cow's weight presses down the pivotable panel 201 so that the panel 201 is forced to pivot downwardly along the pivot axes about pivot points 214, 214' and 215, 215'. The downward pivoting movement of the panel 201 forces the bracket head 212 to be pivoted about the pivot axis through pivot point 213. Thus, the back end of the bracket head 212 is forced to pivot downwardly to the position shown in Figure 18 and the front end of the bracket head 212 is forced to pivot upwardly. Since the rod 203 is fixed attached to the bracket head 212 and the tail supporting members 202(a) to 202(h) are fixedly attached to the rod 203, the pivotal movement of the bracket head 212 along the axis about pivot point 213 results in the corresponding pivotal movement of the tail supporting members 202(a) to 202(h) from the storage position into the in-use position.

The tail supporting members remain in the in-use position while the actuation lever remains pressed down (i.e. while the cow is lying down in the cubicle). The tail guard 200 also includes biaising means (not shown) so that when the lever is released, (i.e. when the cow stands up thereby removing her weight off the area of the mat around the lever) the bracket head is urged to pivot back to its original storage position and the tail supporting means thereby resume their original storage position.

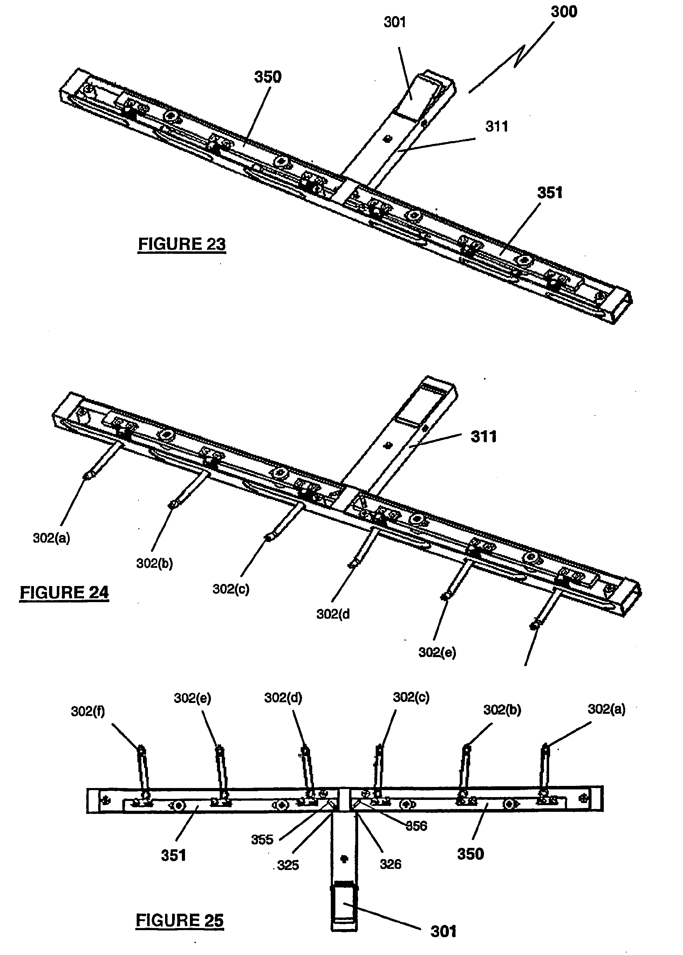

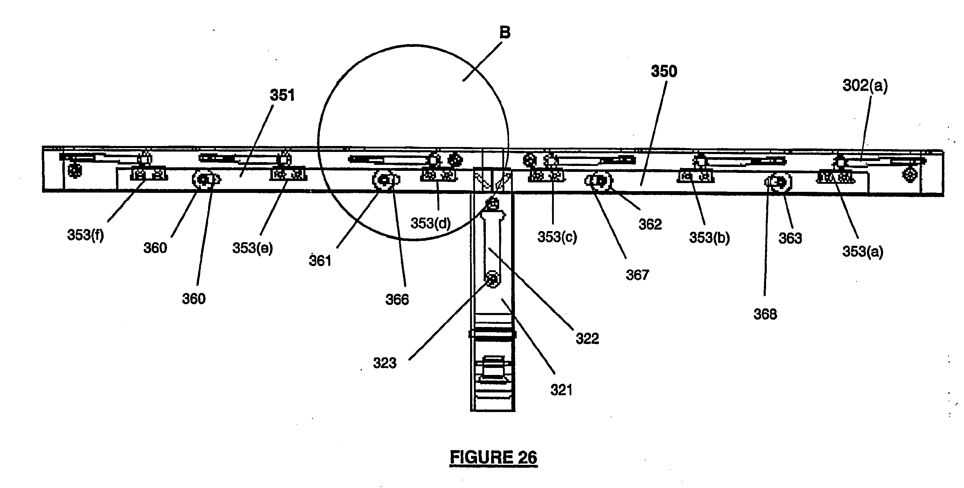

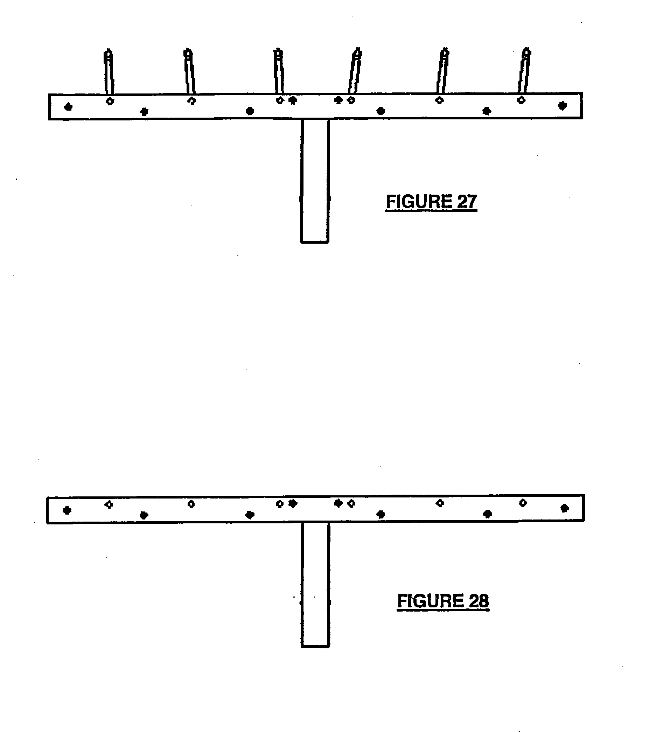

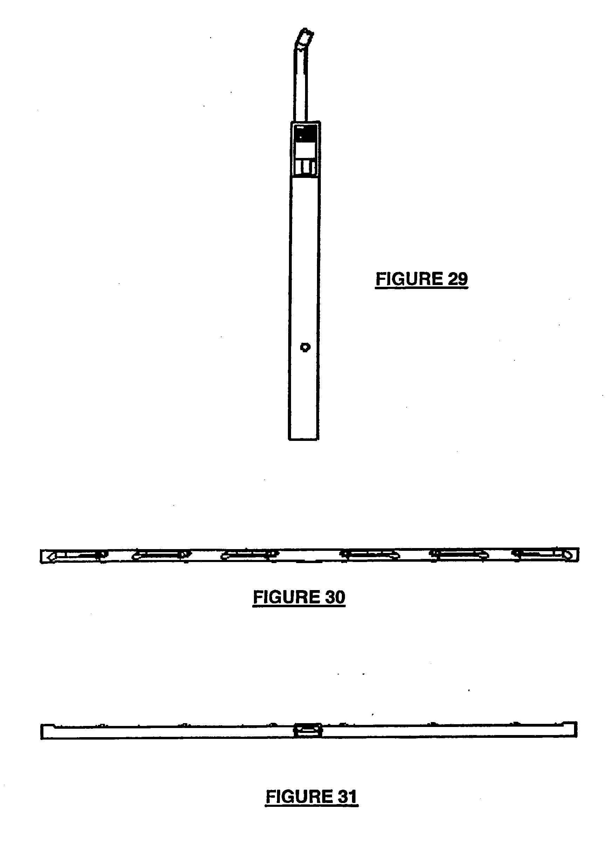

Referring now to Figures 23 to 35 inclusive, a further alternative embodiment of tail guard of the invention will be described. The tail guard in this embodiment is indicated generally by reference numeral 300. The tail guard 300 includes tail supporting members 302(a), 302(b), 302(c), 302(d), 302(e) and 302(f). The tail supporting members are in the form of fingers and are moveable between a storage position as shown in Figure 23 in which they are housed within the tail guard and an in-use position as shown in Figure 24 in which they protrude and are available to hold the animal's tail and prevent it from entering the animal waste material in the area adjacent the raised cubicle bed. Each tail supporting member 302(a) through to 302(f) has a respective pinion 303(a) through to 303(f) fixedly mounted at one end thereof. Each pinion 303(a) to 303(f) is moveable along respective rack members 353(a) through to 353(f).

The rack members 353(a), 353(b), 353(c) are fixedly mounted on a first support limb 350 and rack members 353(d), 353(e) and 353(f) are fixedly mounted on a second support limb 351. The first support limb 350 and the second support limb 351, each includes respective slots 355, 356. The slots 355, 356 are arranged at a 45° angle to the horizontal.

The first support limb 350 and the second support limb 351 also each include two wheels 360, 361 moveable in their respective slots 365, 366 and 367, 368 for facilitating lateral movement of the respective support limbs 350, 51.

The tail guard 300 also includes an actuation lever 301 within a housing 311. The actuation lever 301 includes a wheel 312 provided proximal one end of the lever. The wheel 312 is moveable in an elongate groove 321 provided in a linkage beam 320. Remote from the wheel 312 of the actuation lever 301, the actuation lever 301 has an arm 316. One end of the arm 316 is pivotably connected to the lever 301 along the pivot axis through pivot point 314. The arm 316 is fixedly connected at the other end thereof to the linkage beam 320.

The linkage beam 320 includes a slot 322 in which the guide pin 323 is moveable. This serves to guide the reciprocating movement of the linkage beam 320 arising from activation and subsequent release of the lever 301.

Remote from the connection point of the linkage beam 320 with the actuation lever 301, the linkage beam 320 has two pins 325, 326 fixedly mounted thereon. The pins 325, 326 are moveable in the 45° angled slots 355, 356 provided on the respective first support limb 350 and second support limb 351.

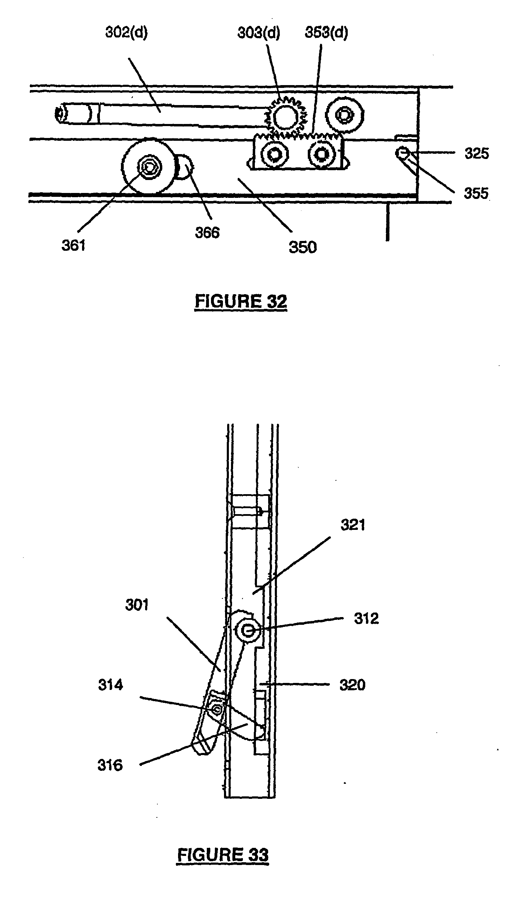

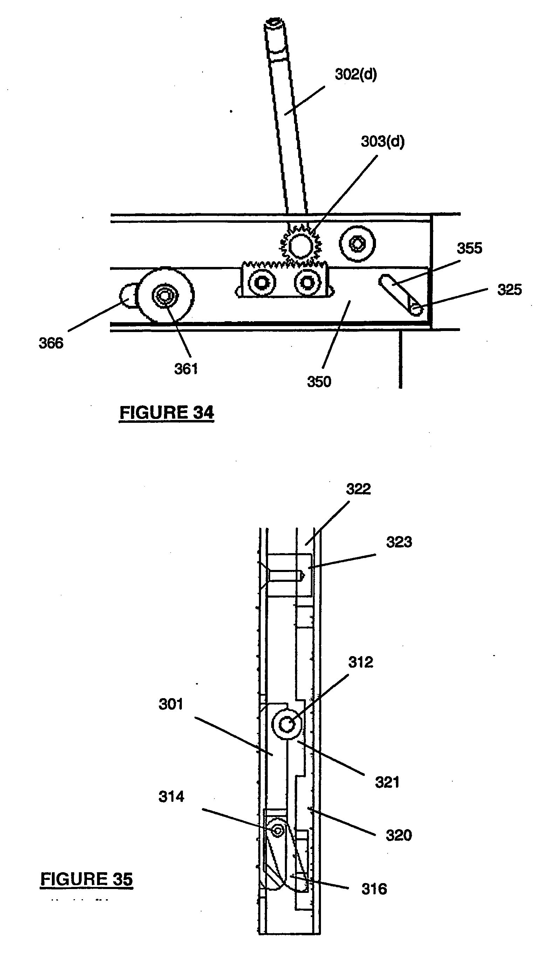

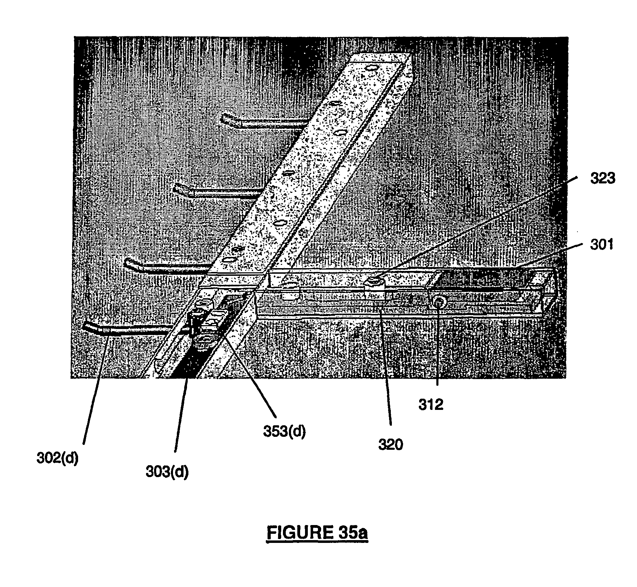

The operation of the tail guard 300 will now be described. The tail guard 300 is positioned on a cubicle bedding area with the portion housing the tail supporting members positioned towards the edge of the cubicle area and with the housing 311 including the actuation lever 301 placed under a cow mat in the cubicle. The tail guard 300 is initially in the storage position as shown in Figure 23 and with the actuation lever 301 and linkage beam 320 in the respective positions shown in Figure 33. When a cow enters the cubicle and lies down on the cow mat, her weight bearing down on the cow mat in the region of the actuation lever 301 results in the lever 301 being pressed downwardly. When the lever 301 is pressed downwardly, the arm 316 is pivotably moved about the pivot axis through pivot point 314. Since the arm 316 is fixedly connected to the linkage beam 320, the pivotal movement of the arm 316 urges the linkage beam 320 rearwardly to the position as shown in Figure 35 and the wheel 312 is moved forwards in the track defined by groove 321.

The rearward movement of the linkage beam 320 causes the pins 325, 326 which are fixedly mounted on the linkage beam 320, to also be moved along the respective 45° angled slots 355, 356 from the position shown in Figure 32 (tail supporting members in storage position) into the position shown in Figure 34 (tail supporting members in the in-use position). The movement of the pins 325, 326 in the slots 355, 356 forces respective support limbs 350, 351 to move laterally towards each other. Since the rack members 353(a) to 353(f) are fixedly mounted on the support limbs 350, 351, this movement of the support limbs 350 and 351 in turn results in the respective rack members 353(a), 353(b), 353(c) and 353(d), 353(e), 353(f) to be moved laterally. The lateral movement of the rack members 353(a) through to 353(f) causes the respective pinions 303(a) to 303(f) to be turned in the rack members, thereby turning respective tail supporting members 302(a) through to 302(f) out of their respective storage positions and into the respective in-use positions.

The tail supporting members remain in the in-use position while the actuation lever remains pressed down (i.e. while the cow is lying down in the cubicle). The tail guard 300 also includes biaising means (now shown in drawings) so that when the lever is released (i.e. the cow stands up), the lever 301 is urged into its original storage position, and this causes the linkage beam 320 to be pushed forwardly thereby causing corresponding movement of the pins 325, 326 in the 45° angled slots 355, 356 and forcing the support limbs to move laterally apart. This in turn causes the tail supporting members to return into their storage positions in the housing of the tail guard 300.

### PREFERRED EMBODIMENT

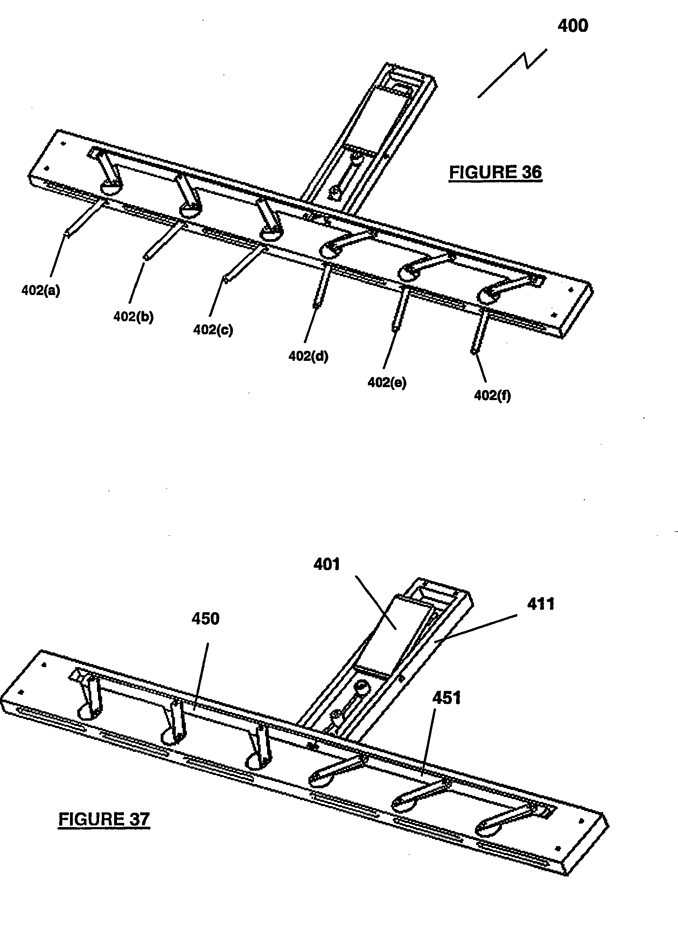

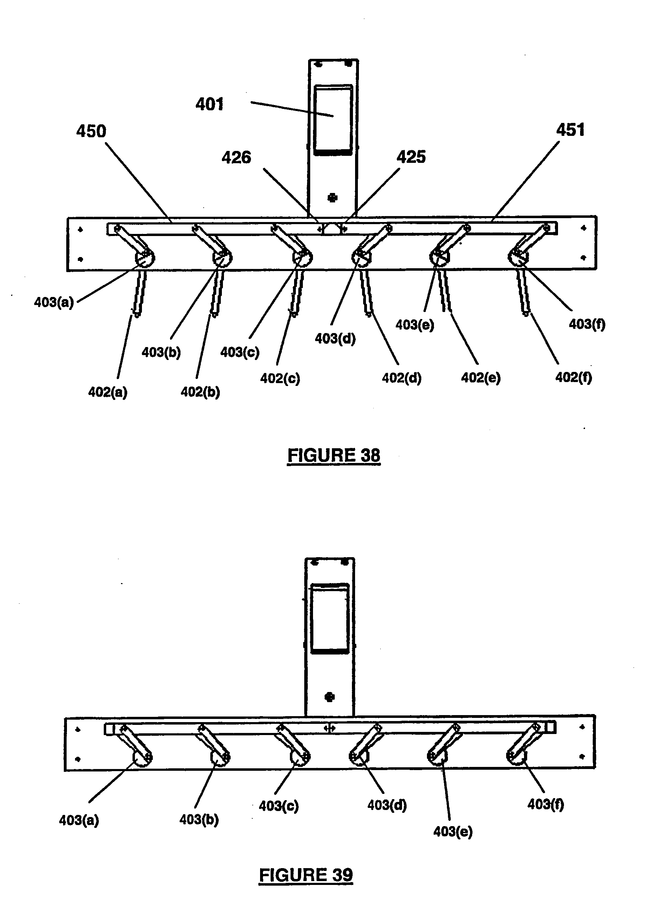

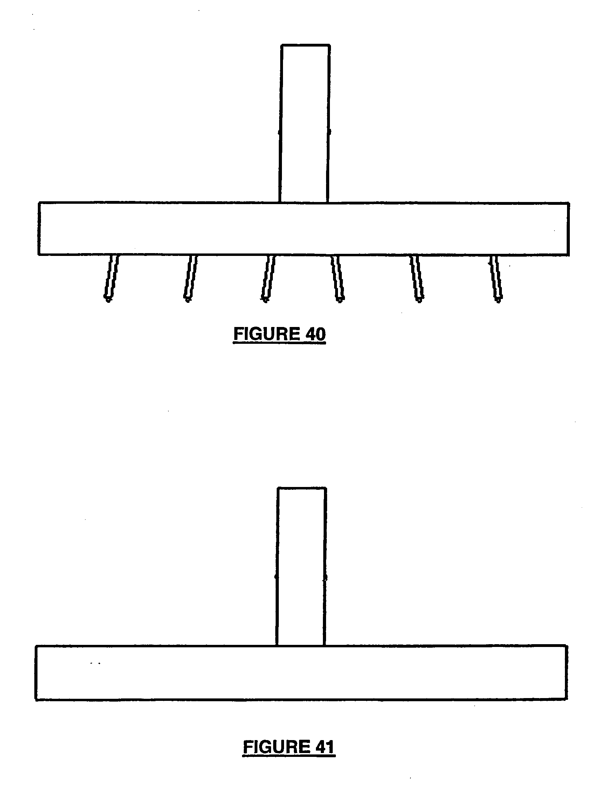

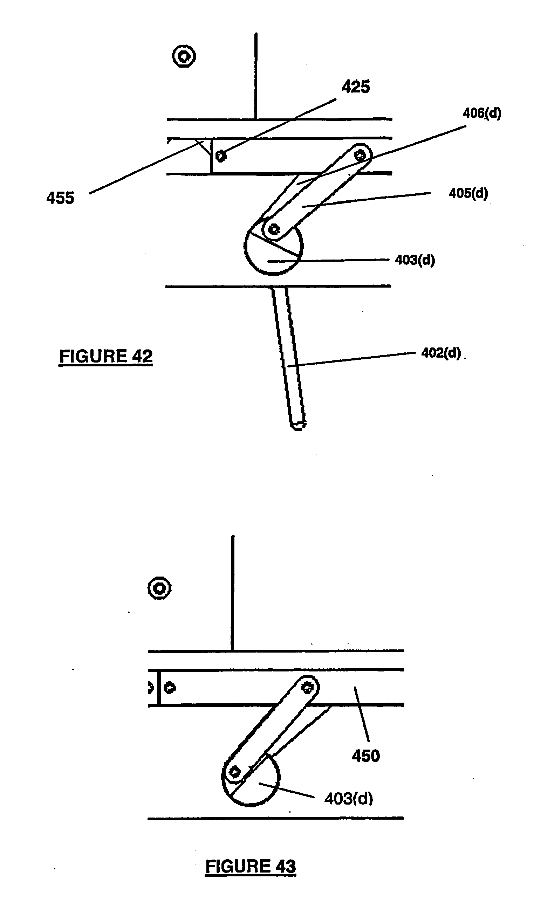

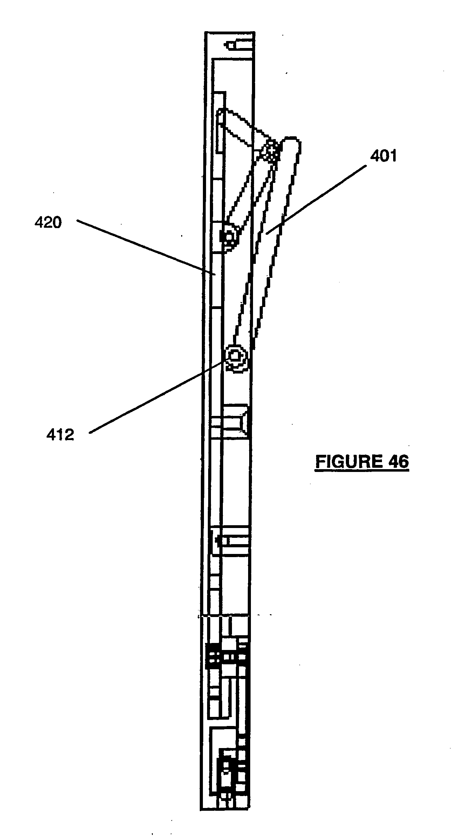

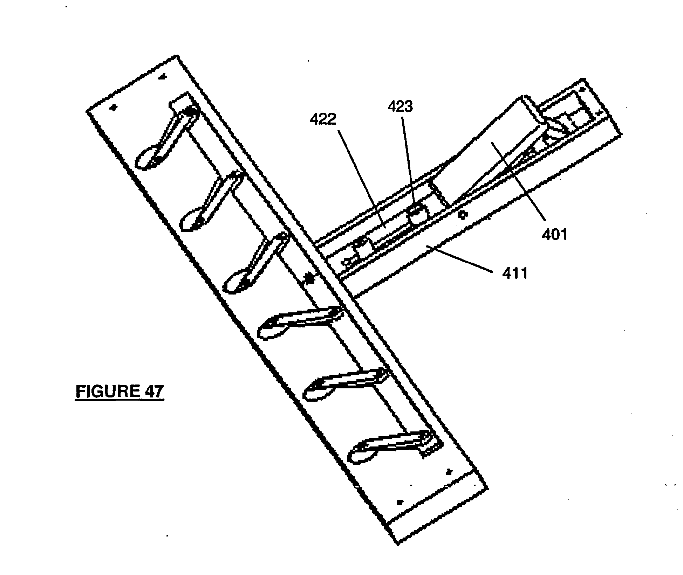

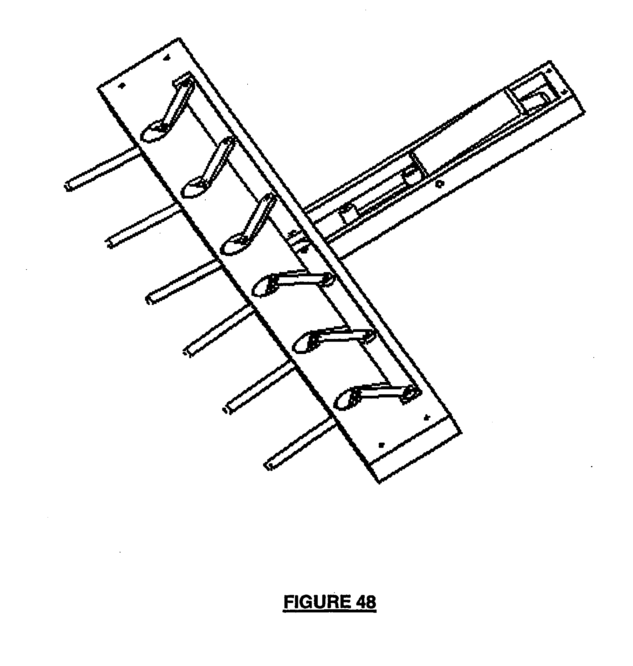

Referring now to Figures 36 to 50, the tail guard in the preferred embodiment will now be described.

In Figures 36 to 50, the preferred embodiment is indicated generally by reference number 400.

The tail guard 400 operates in a manner similar to the tail guard 300 except that instead of each tail supporting member having a rack and pinion arrangement, the tail guard 400 employs a cam connected to each tail supporting member to translate the reciprocating movement of the linkage beam 420 and the resultant movement towards each other of the two support limbs 450, 451, to the respective tail supporting members 402(a) through to 402(f) so as to cause movement of the tail supporting members between the storage position and the in-use position.

The tail guard 400 includes tail supporting members 402(a), 402(b), 402(c), 402(d), 402(e) and 402(f) which are in the form of fingers and are moveable between a storage position as shown in Figure 37 and an in-use position as shown in Figure 36. Each tail supporting member 402(a) through to 402(f) has a respective cam 403(a) through to 403(f) mounted thereon.

The cams 453(a), 453(b), 453(c) are connected to a first support limb 450 and the cams 453(d), 453(e) and 453(f) are connected to a second support limb 451. The cams 403(a) to 403(f) are each rotatably connected to a respective pair of cam arms 405(a), 406(a); 405(b), 406(b); 405(c), 406(c); 405(d), 406(d); 405(e), 406(e); 405(f), 406(f). The cam arms are in turn pivotably connected to their respective support limbs 450, 451.

The first support limb 450 and the second support limb 451, each include respective slots 455, 456 in which respective pins 425, 426 are moveable. The slots 455, 456 are arranged at a 45° angle to the horizontal.

The tail guard 400 also includes an actuation lever 401 within a housing 411. The actuation lever 401 is pivotably connected to a linkage beam 420 at pivot point 413. At the end remote from the pivot point 413, the actuation lever 401 rests on two arms, namely a first arm 416 fixedly connected at one end thereof to the linkage beam 420 and a second arm 417 pivotably connected to the linkage beam 420 at pivot point 412. The arms 416, 417 are pivotably connected to each other at pivot point 414.

The linkage beam 420 includes a slot 422 in which a guide pin 423 is moveable. This serves to guide the reciprocating movement of the linkage beam 420 arising from activation and subsequent release of the lever 401.

Remote from the connection of the linkage beam 420 with the actuation lever 401, the linkage beam 420 has two pins 425, 426 fixedly mounted thereon.

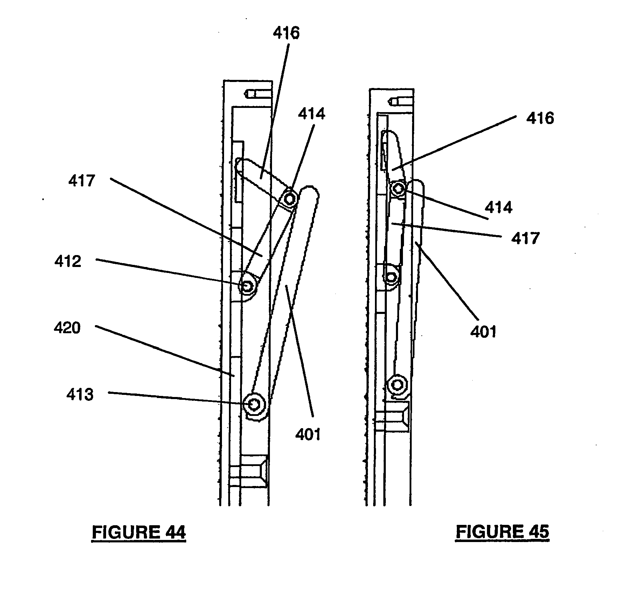

The operation of tail guard 400 will now be described. The tail guard 400 is positioned on a raised cubicle animal bedding area with the portion housing the tail supporting members positioned towards the edge of the raised cubicle area and with the housing 411 including the actuation lever 401 placed under a cow mat in the cubicle. The tail guard 400 is initially in the storage position with the actuation lever 401 in the position as shown in Figure 44. When a cow enters the cubicle and lies down on the cow mat, her weight bearing down in the area of the actuation lever 401 results in the lever 401 being pressed downwardly. When lever 401 is pressed downwardly, the arms 416, 417 are forced downwardly about the pivot axis through pivot point 414. Since the arm 416 is fixedly connected to the linkage beam 420, the pivotal movement of the arms 416, 417 about pivot point 414 urges the linkage beam 420 rearwardly.

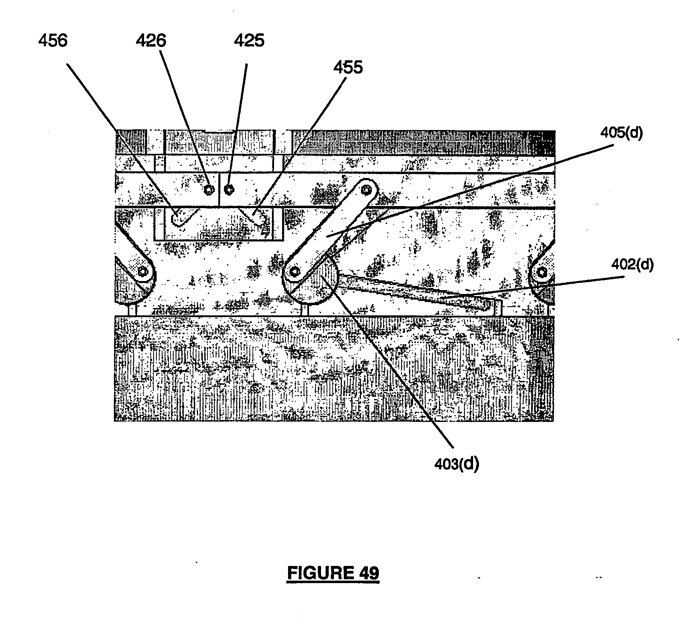

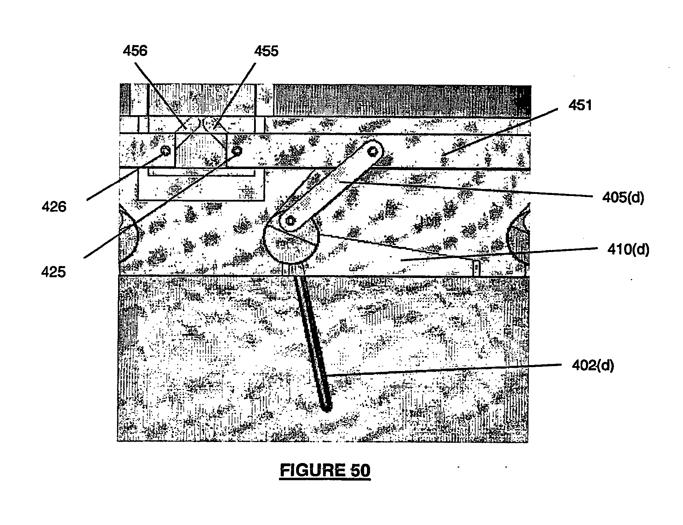

The rearwards motion of the linkage beam 420 causes the pins 425, 426 which are fixedly mounted on the linkage beam 420, to also be moved along the respective slots 455, 456 from the position shown in Figure 49 (tail supporting members in storage position) into the position shown in Figure 50 (tail supporting members in the in-use position). The movement of the pins 425, 426 in the slots 455, 456 forces respective support limbs 450, 451 to be forced to move laterally towards each other. Since the cam arms 405(a) to 405(f) are pivotably mounted on the support linmbs 450, 451, this lateral movement of the support limbs 450 and 451 in turn results in the pivotal movement of respective pairs of cam arms 405(a), 406(a); 405(b), 406(b); 405(c), 406(c); 405(d), 406(d); 405(e), 406(e); 405(f), 406(f). The movement of the cam arms causes the respective cams 403(a) to 403(f) to move arcuately, thereby turning respective tail supporting members 402(a) through to 402(f) out of their respective storage positions (storage groove 410(f) shown in Figure 50) and into the respective in-use positions.

The tail supporting members 402(a) through to 402(f) remain in the in-use position while the actuation lever remains pressed down (i.e. while the cow is lying down in the cubicle). The tail guard 400 also includes biaising means (not shown in drawings) so that when the lever is released (i.e. the cow stands up), the lever 401 is urged into its original storage position, and this causes the linkage beam 420 to be pushed forwardly thereby causing corresponding movement of the pins 425, 426 in the 45° angled slots 455, 456 and forcing the support limbs to move laterally apart. This in turn causes the tail supporting members to return into their storage positions in the housing of the tail guard 400.

It will, of course, be understood that the tail guard of the present invention is not limited to the specific details described herein, which are given by way of example only and that various modifications and alternations are possible within the scope of the invention as defined in the appended claims.

## Claims

1. A guard (10, 20, 30, 40, 50, 60, 70, 80, 90, 110, 200, 300, 400) for an animal's tail for use on a raised bedding area (101), the guard having at least one tail supporting member (12, 22, 32, 42, 52, 62, 72, 82, 92, 112, 202, 302, 402) adapted for holding an animal's tail out of contact with animal waste material adjacent the raised bedding area, thereby generally preventing the animal's tail from becoming soiled, the tail supporting member being moveable between a storage position and an in-use position in which the tail supporting member supports the animal's tail, the tail guard also comprising means for moving the at least one tail supporting member between the storage position and the in-use position, whereby when an animal lies down on the bedding area, the tail supporting member is moved into the in-use position and when an animal stands up, the tail supporting member is moved into the storage position.

2. A guard as claimed in Claim 1, wherein the means for moving the tail supporting member comprises a lever for causing pivotal movement of the tail supporting member.

3. A guard as claimed in Claim 1 or Claim 2 wherein in the in-use position, the tail supporting member is co-planar with the plane of the bedding area.

4. A guard as claimed in any one of the preceding claims wherein the tail guard is substantially "L-shaped" in cross-section with one limb of the substantially "L" shaped profile being adapted for a bovine animal to exert its weight thereon and the other limb defining the at least one tail supporting member.

5. A guard as claimed in Claim 4 wherein at least a portion of the lever is included in the longer limb of the "L" shaped profile whereby the weight of the animal lying down in the cubicle operates the lever and causes the at least one tail supporting member to pivot into the in-use position.

6. A guard as claimed in Claim 4 or Claim 5 wherein the lever is in the form of an enclosed channel or pipe included in the longer limb of the "L"-shaped tail guard.

7. A guard as claimed in any one of the preceding claims wherein an electrical wire is provided to carry an electric current to a motor unit to power the movement of the tail supporting member between the storage position and the in-use position.

8. A guard as claimed in any one of the preceding claims wherein the tail guard comprises a relatively rigid elongate strip of material functioning as the lever with the remainder of the tail guard being manufactured from relatively flexible material.

9. A tail guard as claimed in Claim 1 wherein the tail supporting member is in the form of a tail supporting finger.

10. A tail guard as claimed in Claim 9 wherein the tail supporting member comprises a plurality of tail supporting fingers.

11. A tail guard as claimed in Claim 9 or Claim 10 wherein the tail supporting finger(s) are pivotably moveable between the storage position and the in-use position.

12. A tail guard as claimed in Claim 1 wherein the means for moving the tail supporting member between the storage position and the in-use position comprises a lever pivotably moveable along a pivot axis about a pivot point.

13. A tail guard as claimed in Claim 12 wherein the lever is connected to a bracket head on which the at least one tail supporting member is fixedly mounted.

14. A tail guard as claimed in Claim 13 wherein the bracket head has a rod fixedly mounted thereon and the at least one tail supporting member is fixedly mounted on the rod.

15. A tail guard as claimed in Claim 13 wherein the lever is pivotably connected to the bracket head such that when the lever is activated, the bracket head is forced to pivot and thereby move the at least one tail supporting member between the storage position and the in-use position.

16. A tail guard as claimed in any one of the Claims 9 to 15 wherein the tail guard includes a housing, the lever being pivotably connected to rear end of the housing and the bracket head being pivotably connected to the front end of the housing.

17. A tail guard as claimed in Claim 1 wherein the means for moving the at least one tail supporting member between the storage position and the in-use position comprises a rack and pinion arrangement.

18. A tail guard as claimed in Claim 17 wherein the or each tail supporting member includes a pinion mounted at one end thereof.

19. A tail guard as claimed in Claims 17 or 18 wherein the tail guard includes at least one supporting limb on which is mounted at least one rack, such that the pinion provided on the or each tail supporting member is moveable along the at least one rack.

20. A tail guard as claimed in Claim 19 wherein the tail guard includes a plurality of tail supporting members, each tail supporting member having a pinion mounted thereon, the tail guard also including a corresponding plurality of racks, mounted on the at least one support limb, each pinion being adapted for movement along each respective rack.

21. A tail guard as claimed in Claim 19 or Claim 20 wherein linkage means are provided connecting the lever to the support limb, whereby on activation of the lever by an animal lying in the area around the lever, the support limb is forced to be moved laterally, resulting in movement of the support limb and movement of the or each rack, thereby causing the pinion to move along the rack and resulting in movement of the tail supporting member between the storage position and the in-use position.

22. A tail guard as claimed in any one of Claims 20 or 21, wherein the linkage means connecting the lever to the support limb comprises a linkage beam, the linkage beam having at least one pin engageable in at least one slot provided on the support limb.

23. A tail guard as claimed in Claim 22 wherein the pin is moveable within the slot so that when the lever is activated, the linkage beam is forced to move, thereby causing movement of the at least one pin in the slot.

24. A tail guard as claimed in Claim 23 wherein the movement of the pin in the slot of the support limb results in lateral movement of the support limb and corresponding movement of the rack.

25. A tail guard as claimed in any one Claims 21 to 24 wherein the lever is fixedly connected to one end of the linkage beam.

26. A tail guard as claimed in any one of Claims 22 to 25 wherein the slot is provided at a 45° angle to the horizontal.

27. A tail guard as claimed in Claim 1 wherein the means for moving the at least one tail supporting member between the storage position and the in-use position comprises a cam arrangement.

28. A tail guard as claimed in Claim 27 wherein the or each tail supporting member includes a cam provided at one end thereof.

29. A tail guard as claimed in Claims 27 or 28 wherein the tail guard includes at least one supporting limb having means for connection of the supporting limb to the or each cam so that lateral movement of the supporting limb results in arcuate movement of the cam.

30. A tail guard as claimed in any one of Claims 28 or 29 wherein the tail guard comprises a plurality of tail supporting members, each tail supporting member having a cam fixedly mounted thereto so that arcuate movement of the cam results in movement of the tail supporting members between the storage position and the in-use position.

31. A tail guard as claimed in any one of Claims 28 to 30 wherein the tail guard includes linkage means connecting the lever to the or each cam.

32. A tail guard as claimed in Claim 31 wherein the linkage means includes a support limb to which the or each cam is connected by at least one cam arm.

33. A tail guard as claimed in Claim 31 or Claim 32 wherein the linkage means further includes a linkage beam, the linkage beam having at least one pin engageable in a slot provided on the support limb.

34. A tail guard as claimed in Claim 33 wherein the pin is moveable within the slot so that when the lever is activated, the linkage beam is forced to move, thereby causing movement of the at least one pin in the slot.

35. A tail guard as claimed in Claim 34 wherein movement of the pin in the slot of the support limb results in lateral movement of the support limb and corresponding movement of the cam arms and the cam, thereby resulting in movement of the tail supporting members between the storage position and the in-use position.

36. A tail guard as claimed in any one of the Claims 33 to 35 wherein the at least one slot is provided in the support limb at a 45° angle to the horizontal.

37. A tail guard as claimed in Claim 1 wherein the means for moving the at least one tail supporting member between the storage position and the in-use position comprises linkage means connecting the lever to a support limb having means for transferring movement of the support limb to the at least one tail supporting member so as to cause movement thereof.

38. A tail guard as claimed in Claim 37 wherein the linkage means comprises a linkage beam fixedly connected at one end thereof to the lever such that activation of the lever causes movement of the linkage beam, the linkage beam having at least one pin provided towards other end thereof, the at least one pin being slideably engageable in at least one corresponding slot provided in the support limb, whereby movement of the linkage beam causes movement of the support limb.

39. A tail guard as claimed in Claim 37 wherein the means for transferring movement comprises a rack and pinion arrangement.

40. A tail guard as claimed in Claim 37 wherein the means for transferring movement comprises a cam arrangement.

41. A tail guard as claimed in any one of the preceding claims including biaising means for biaising the tail supporting members into the storage position having been in the in-use position.

42. A tail guard as claimed in Claim 41 wherein the biaising means are provided in association with the lever.

43. A tail guard as claimed in any one of the preceding claims wherein the tail guard is formed of plastics material, preferably having elastic properties.

## Patentansprüche

1. Schutzvorrichtung (10, 20, 30, 40, 50, 60, 70, 80, 90, 110, 200, 300, 400) für den Schwanz eines Tiers zur Verwendung auf einem erhöhten Einstreubereich (101), wobei die Schutzvorrichtung mindestens ein Schwanzstützelement (12, 22, 32, 42, 52, 62, 72, 82, 92, 112, 202, 302, 402) umfasst, das dazu geeignet ist, den Schwanz eines Tiers außer Kontakt mit den Tierabfällen neben dem erhöhten Einstreubereich zu halten, wodurch im Allgemeinen verhindert wird, dass der Schwanz des Tiers schmutzig wird, wobei das Schwanzstützelement zwischen einer Lagerposition und einer Gebrauchsposition bewegbar ist, in der das Schwanzstützelement den Schwanz des Tiers stützt, wobei die Schwanzschutzvorrichtung auch Mittel umfasst, um das mindestens eine Schwanzstützelement zwischen der Lagerposition und der Gebrauchsposition zu bewegen, wodurch, wenn ein Tier sich auf dem Einstreubereich ablegt, das Schwanzstützelement in die Gebrauchsposition bewegt wird, und wenn ein Tier aufsteht, das Schwanzstützelement in die Lagerposition bewegt wird.

2. Schutzvorrichtung nach Anspruch 1, wobei die Mittel zum Bewegen des Schwanzstützelements einen Hebel umfassen, um eine Schwenkbewegung des Schwanzstützelements zu verursachen.

3. Schutzvorrichtung nach Anspruch 1 oder 2, wobei das Schwanzstützelement in der Gebrauchsposition mit der Ebene des Einstreubereichs koplanar ist.

4. Schutzvorrichtung nach einem der vorhergehenden Ansprüche, wobei die Schwanzschutzvorrichtung einen im Wesentlichen "L"-förmigen Querschnitt aufweist, wobei ein Glied des im Wesentlichen "L"-förmigen Profils dazu geeignet ist, dass ein Horntier sich darauf lehnt, und der andere Glied das mindestens eine Schwanzstützelement definiert.

5. Schutzvorrichtung nach Anspruch 4, wobei der mindestens eine Abschnitt des Hebels in dem längeren Glied des "L-förmigen" Profils enthalten ist, wodurch das Gewicht des in dem Ständer liegenden Tiers den Hebel betätigt und das mindestens eine Schwanzstützelement zum Verschwenken in die Gebrauchsposition bringt.

6. Schutzvorrichtung nach Anspruch 4 oder 5, wobei der Hebel in Form eines geschlossenen Kanals oder Rohrs vorliegt, der bzw. das in dem längeren Glied der "L"-förmigen Schwanzschutzvorrichtung eingeschlossen ist.

7. Schutzvorrichtung nach einem der vorhergehenden Ansprüche, wobei ein elektrischer Draht bereitgestellt wird, um elektrischen Strom bis zu einer Motoreinheit zu bringen, um die Bewegung des Schwanzstützelements zwischen der Lagerposition und der Gebrauchsposition anzutreiben.

8. Schutzvorrichtung nach einem der vorhergehenden Ansprüche, wobei die Schwanzschutzvorrichtung einen relativ steifen länglichen Materialstreifen umfasst, der als Hebel dient, wobei der Rest der Schwanzschutzvorrichtung aus einem relativ flexiblen Material hergestellt wird.

9. Schwanzschutzvorrichtung nach Anspruch 1, wobei das Schwanzstützelement in Form eines Schwanzstützfingers vorliegt.

10. Schwanzschutzvorrichtung nach Anspruch 9, wobei das Schwanzstützelement eine Vielzahl von Schwanzstützfingern umfasst.

11. Schwanzschutzvorrichtung nach Anspruch 9 oder 10, wobei der oder die Schwanzstützfinger schwenkbar zwischen der Lagerposition und der Gebrauchsposition bewegbar ist bzw. sind.

12. Schwanzschutzvorrichtung nach Anspruch 1, wobei die Mittel zum Bewegen des Schwanzstützelements zwischen der Lagerposition und der Gebrauchsposition einen Hebel umfassen, der schwenkbar entlang einer Schwenkachse um einen Drehpunkt herum bewegbar ist.

13. Schwanzschutzvorrichtung nach Anspruch 12, wobei der Hebel mit einem Halterkopf verbunden ist, auf dem mindestens ein Schwanzstützelement fest angebracht ist.

14. Schwanzschutzvorrichtung nach Anspruch 13, wobei der Halterkopf einen Stab aufweist, der fest darauf angebracht ist, und das mindestens eine Schwanzstützelement fest auf dem Stab angebracht ist.

15. Schwanzschutzvorrichtung nach Anspruch 13, wobei der Hebel verschwenkbar mit dem Halterkopf verbunden ist, so dass, wenn der Hebel betätigt wird, der Halterkopf sich zwangsläufig verschwenkt und **dadurch** das mindestens eine Schwanzstützelement zwischen der Lagerposition und der Gebrauchsposition bewegt.

16. Schwanzschutzvorrichtung nach einem der Ansprüche 9 bis 15, wobei die Schwanzschutzvorrichtung eine Aufnahme umfasst, wobei der Hebel verschwenkbar mit dem hinteren Ende der Aufnahme verbunden ist und der Halterkopf verschwenkbar mit dem vorderen Ende der Aufnahme verbunden ist.

17. Schwanzschutzvorrichtung nach Anspruch 1, wobei die Mittel zum Bewegen des mindestens einen Schwanzstützelements zwischen der Lagerposition und der Gebrauchsposition eine Zahnstangenanordnung umfasst.

18. Schwanzschutzvorrichtung nach Anspruch 17, wobei das oder jedes Schwanzstützelement ein Ritzel umfasst, das an einem Ende davon angebracht ist.

19. Schwanzschutzvorrichtung nach Anspruch 17 oder 18, wobei die Schwanzschutzvorrichtung mindestens ein Stützglied umfasst, an dem mindestens eine Zahnstange angebracht ist, so dass das auf dem oder jedem Schwanzstützelement vorgesehene Ritzel entlang der mindestens einen Zahnstange bewegbar ist.

20. Schwanzschutzvorrichtung nach Anspruch 19, wobei die Schwanzschutzvorrichtung eine Vielzahl von Schwanzstützelementen umfasst, wobei auf jedem Schwanzstützelement ein Ritzel angebracht ist, wobei die Schwanzschutzvorrichtung auch eine entsprechende Vielzahl von Zahnstangen umfasst, die auf dem mindestens einen Stützglied angebracht sind, wobei jedes Ritzel für eine Bewegung entlang der jeweiligen Zahnstange geeignet ist.

21. Schwanzschutzvorrichtung nach Anspruch 19 oder 20, wobei Verbindungsmittel bereitgestellt werden, die den Hebel mit dem Stützglied verbinden, wodurch bei der Betätigung des Hebels durch ein im Bereich um den Hebel herum liegendes Tier das Stützglied zwangsläufig seitlich bewegt wird, was zu einer Bewegung des Stützglieds und zu einer Bewegung der oder jeder Zahnstange führt, wodurch das Ritzel dazu veranlasst wird, sich entlang der Zahnstange zu bewegen, und was zu einer Bewegung des Schwanzstützelements zwischen der Lagerposition und der Gebrauchsposition führt.

22. Schwanzschutzvorrichtung nach einem der Ansprüche 20 oder 21, wobei die Verbindungsmittel, die den Hebel mit dem Stützglied verbinden, einen Verbindungsholm umfassen, wobei der Verbindungsholm mindestens einen Zapfen aufweist, der in mindestens einen auf dem Stützglied vorgesehenen Schlitz in Eingriff gebracht werden kann.

23. Schwanzschutzvorrichtung nach Anspruch 22, wobei der Zapfen innerhalb des Schlitzes bewegbar ist, so dass, wenn der Hebel betätigt wird, der Verbindungsholm sich zwangsläufig bewegt, wodurch eine Bewegung des mindestens einen Zapfens in dem Schlitz verursacht wird.

24. Schwanzschutzvorrichtung nach Anspruch 23, wobei die Bewegung des Zapfens in dem Schlitz des Stützglieds zu einer seitlichen Bewegung des Stützglieds und zu einer entsprechenden Bewegung der Zahnstange führt.

25. Schwanzschutzvorrichtung nach einem der Ansprüche 21 bis 24, wobei der Hebel fest mit einem Ende des Verbindungsholms verbunden ist.

26. Schwanzschutzvorrichtung nach einem der Ansprüche 22 bis 25, wobei der Schlitz in einem Winkel von 45° zur Waagerechten bereitgestellt wird.

27. Schwanzschutzvorrichtung nach Anspruch 1, wobei die Mittel zum Bewegen des mindestens einen Schwanzstützelements zwischen der Lagerposition und der Gebrauchsposition eine Nockenanordnung umfassen.

28. Schwanzschutzvorrichtung nach Anspruch 27, wobei das oder jedes Schwanzstützelement einen Nocken umfasst, der an einem Ende davon bereitgestellt wird.

29. Schwanzschutzvorrichtung nach Anspruch 27 oder 28, wobei die Schwanzschutzvorrichtung mindestens ein Stützglied umfasst, das Mittel aufweist zum Verbinden des Stützglieds mit dem oder jedem Nocken, so dass eine seitliche Bewegung des Stützglieds zu einer bogenförmigen Bewegung des Nockens führt.

30. Schwanzschutzvorrichtung nach einem der Ansprüche 28 oder 29, wobei die Schwanzschutzvorrichtung eine Vielzahl von Schwanzstützelementen umfasst, wobei auf jedem Schwanzstützelement ein Nocken fest angebracht ist, so dass die bogenförmige Bewegung des Nockens zu einer Bewegung der Schwanzstützelemente zwischen der Lagerposition und der Gebrauchsposition führt.

31. Schwanzschutzvorrichtung nach einem der Ansprüche 28 bis 30, wobei die Schwanzschutzvorrichtung Verbindungsmittel umfasst, die den Hebel mit dem oder jedem Nocken verbinden.

32. Schwanzschutzvorrichtung nach Anspruch 31, wobei die Verbindungsmittel ein Stützglied umfassen, mit dem der oder jeder Nocken durch mindestens einen Nockenarm verbunden ist.

33. Schwanzschutzvorrichtung nach Anspruch 31 oder 32, wobei die Verbindungsmittel ferner einen Verbindungsholm umfassen, wobei der Verbindungsholm mindestens einen Zapfen aufweist, der in einen auf dem Stützglied vorgesehenen Schlitz in Eingriff gebracht werden kann.

34. Schwanzschutzvorrichtung nach Anspruch 33, wobei der Zapfen innerhalb des Schlitzes bewegbar ist, so dass, wenn der Hebel betätigt wird, sich der Verbindungsholm zwangsläufig bewegt, wodurch eine Bewegung des mindestens einen Zapfens in dem Schlitz verursacht wird.

35. Schwanzschutzvorrichtung nach Anspruch 34, wobei eine Bewegung des Zapfens in dem Schlitz des Stützglieds zu einer seitlichen Bewegung des Stützglieds und zu einer entsprechenden Bewegung der Nockenarme und des Nocken führt, was somit zu einer Bewegung der Schwanzstützelemente zwischen der Lagerposition und der Gebrauchsposition führt.

36. Schwanzschutzvorrichtung nach einem der Ansprüche 33 bis 35, wobei der mindestens eine Schlitz in dem Stützglied unter einem Winkel von 45° zur Waagerechten bereitgestellt wird.

37. Schwanzschutzvorrichtung nach Anspruch 1, wobei die Mittel zum Bewegen des mindestens einen Schwanzstützelements zwischen der Lagerposition und der Gebrauchsposition Verbindungsmittel umfassen, die den Hebel mit einem Stützglied verbinden, das Mittel umfasst, um eine Bewegung des Stützglieds auf das mindestens eine Schwanzstützelement zu übertragen, um eine Bewegung desselben zu verursachen.

38. Schwanzschutzvorrichtung nach Anspruch 37, wobei die Verbindungsmittel einen Verbindungsholm umfassen, der an einem Ende davon fest mit dem Hebel verbunden ist, so dass die Betätigung des Hebels eine Bewegung des Verbindungsholm verursacht, wobei der Verbindungsholm mindestens einen Zapfen aufweist, der zu seinem anderen Ende hin bereitgestellt wird, wobei der mindestens eine Zapfen gleitbar in mindestens einen entsprechenden Schlitz, der im Stützglied bereitgestellt wird, gleitbar in Eingriff gebracht werden kann, wodurch die Bewegung des Verbindungsholms eine Bewegung des Stützglieds verursacht.

39. Schwanzschutzvorrichtung nach Anspruch 37, wobei die Mittel zum Übertragen einer Bewegung eine Zahnstangenanordnung umfassen.

40. Schwanzschutzvorrichtung nach Anspruch 37, wobei die Mittel zum Übertragen einer Bewegung eine Nockenanordnung umfassen.

41. Schwanzschutzvorrichtung nach einem der vorhergehenden Ansprüche, umfassend Vorspannmittel zum Vorspannen der Schwanzstützmittel in die Lagerposition, nachdem sie in der Gebrauchsposition waren.

42. Schwanzschutzvorrichtung nach Anspruch 41, wobei die Vorspannmittel in Verbindung mit dem Hebel bereitgestellt werden.

43. Schwanzschutzvorrichtung nach einem der vorhergehenden Ansprüche, wobei die Schwanzschutzvorrichtung aus Kunststoff gebildet wird, bevorzugt mit elastischen Eigenschaften.

## Revendications

1. Dispositif de protection (10, 20, 30, 40, 50, 60, 70, 80, 90, 110, 200, 300, 400) pour la queue d'un animal pour une utilisation sur une zone de litière surélevée (101), le dispositif de protection comportant au moins un élément de support de queue (12, 22, 32, 42, 52, 62, 72, 82, 92, 112, 202, 302, 402) adapté pour tenir la queue d'un animal hors de contact avec les déchets animaliers à côté de la zone de litière surélevée, empêchant ainsi en général que la queue de l'animal se salisse, l'élément de support de queue étant mobile entre une position de rangement et une position d'utilisation dans laquelle l'élément de support de queue supporte la queue de l'animal, le dispositif de protection de queue comprenant également des moyens pour déplacer ledit au moins un élément de support de queue entre la position de rangement et la position d'utilisation, de manière à ce que quand un animal se couche sur la zone de litière, l'élément de support de queue est déplacé dans la position d'utilisation et quand un animal se lève, l'élément de support de queue est déplacé dans la position de rangement.

2. Dispositif de protection selon la revendication 1, dans lequel les moyens pour déplacer l'élément de support de queue comprennent un levier pour provoquer un mouvement pivotant de l'élément de support de queue.

3. Dispositif de protection selon la revendication 1 ou 2, dans lequel, dans la position d'utilisation, l'élément de support de queue est coplanaire avec le plan de la zone de litière.

4. Dispositif de protection selon l'une quelconque des revendications précédentes, dans lequel le dispositif de protection de queue présente une section transversale substantiellement "en forme de L", une branche du profil substantiellement en forme de "L" étant adaptée pour qu'un bovin s'appuie dessus et l'autre branche définissant ledit au moins élément de support de queue.

5. Dispositif de protection selon la revendication 4, dans lequel ladite au moins une portion du levier est comprise dans la branche plus longue du profil en forme de "L", de manière à ce que le poids de l'animal couché dans la case actionne le levier et fait pivoter ledit au moins un élément de support de queue à pivoter dans la position d'utilisation.

6. Dispositif de protection selon la revendication 4 ou 5, dans lequel le levier se présente sous la forme d'un canal ou d'un tuyau fermé compris dans la branche plus longue du dispositif de protection de queue en forme de "L".

7. Dispositif de protection selon l'une quelconque des revendications précédentes, dans lequel un fil électrique est prévu pour transporter un courant électrique jusqu'à une unité de moteur pour alimenter le mouvement de l'élément de support de queue entre la position de rangement et la position d'utilisation.

8. Dispositif de protection selon l'une quelconque des revendications précédentes, dans lequel le dispositif de protection de queue comprend une bande de matériau allongée, relativement rigide, servant de levier, le reste du dispositif de protection de queue étant fabriqué à partir d'un matériau relativement souple.

9. Dispositif de protection de queue selon la revendication 1, dans lequel l'élément de support de queue se présente sous la forme d'un doigt de support de queue.

10. Dispositif de protection de queue selon la revendication 9, dans lequel l'élément de support de queue comprend une pluralité de doigts de support de queue.

11. Dispositif de protection de queue selon la revendication 9 ou 10, dans lequel le ou les doigts de support de queue sont mobiles en pivotement entre la position de rangement et la position d'utilisation.

12. Dispositif de protection de queue selon la revendication 1, dans lequel les moyens pour déplacer l'élément de support de queue entre la position de rangement et la position d'utilisation comprennent un levier mobile en pivotement le long d'un axe de pivotement autour d'un point de pivotement.

13. Dispositif de protection de queue selon la revendication 12, dans lequel le levier est raccordé à une tête de console sur laquelle ledit au moins un élément de support de queue est monté solidement.

14. Dispositif de protection de queue selon la revendication 13, dans lequel la tête de console présente une tige montée solidement sur celle-ci et ledit au moins un élément de support de queue est monté solidement sur la tige.

15. Dispositif de protection de queue selon la revendication 13, dans lequel le levier est raccordé en pivotement à la tête de console de sorte que quand le levier est activé, la tête de console est obligée de pivoter et de déplacer ainsi ledit au moins un élément de support de queue entre la position de rangement et la position d'utilisation.

16. Dispositif de protection de queue selon l'une quelconque des revendications 9 à 15, dans lequel le dispositif de protection de queue comprend un logement, le levier étant raccordé en pivotement à l'extrémité arrière du logement et la tête de console étant raccordée en pivotement à l'extrémité avant du logement.

17. Dispositif de protection de queue selon la revendication 1, dans lequel les moyens pour déplacer ledit au moins un élément de support de queue entre la position de rangement et la position d'utilisation comprennent un agencement à crémaillère et pignon.

18. Dispositif de protection de queue selon la revendication 17, dans lequel le ou chaque élément de support de queue comprend un pignon monté à son extrémité.

19. Dispositif de protection de queue selon la revendication 17 ou 18, dans lequel le dispositif de protection de queue comprend au moins une branche de support sur laquelle est montée au moins une crémaillère, de sorte que le pignon prévu sur le ou chaque élément de support de queue est mobile le long de ladite au moins une crémaillère.

20. Dispositif de protection de queue selon la revendication 19, dans lequel le dispositif de protection de queue comprend une pluralité d'éléments de support de queue, chaque élément de support de queue comportant un pignon monté sur celui-ci, le dispositif de protection de queue comprenant également une pluralité correspondante de crémaillères, montées sur ladite au moins une branche de support, chaque pignon étant adapté pour un mouvement le long de chaque crémaillère respective.

21. Dispositif de protection de queue selon la revendication 19 ou 20, dans lequel des moyens de liaison sont prévus qui raccordent le levier à la branche de support, de manière à ce que suite à l'activation du levier par un animal couché dans la zone autour du levier, la branche de support est forcément déplacée latéralement, ayant pour résultat un mouvement de la branche de support et un mouvement de la ou de chaque crémaillère, amenant ainsi le pignon à se déplacer le long de la crémaillère et ayant pour résultat un mouvement de l'élément de support de queue entre la position de rangement et la position d'utilisation.

22. Dispositif de protection de queue selon l'une quelconque des revendications 20 ou 21, dans lequel les moyens de liaison raccordant le levier à la branche de support comprennent une barre de liaison, la barre de liaison comportant au moins une cheville pouvant être mise en prise dans au moins une fente prévue sur la branche de support.

23. Dispositif de protection de queue selon la revendication 22, dans lequel la cheville est mobile à l'intérieur de la fente de sorte que quand le levier est actionné, la barre de liaison se déplace forcément, provoquant ainsi un mouvement de ladite au moins une cheville dans la fente.

24. Dispositif de protection de queue selon la revendication 23, dans lequel le mouvement de la cheville dans la fente de la branche de support aboutit à un mouvement latéral de la branche de support et à un mouvement correspondant de la crémaillère.

25. Dispositif de protection de queue selon l'une quelconque des revendications 21 à 24, dans lequel le levier est raccordé solidement à une extrémité de la barre de liaison.

26. Dispositif de protection de queue selon l'une quelconque des revendications 22 à 25, dans lequel la fente est prévue sous un angle de 45° par rapport à l'horizontale.

27. Dispositif de protection de queue selon la revendication 1, dans lequel les moyens pour déplacer ledit au moins un élément de support de queue entre la position de rangement et la position d'utilisation comprennent un agencement de cames.

28. Dispositif de protection de queue selon la revendication 27, dans lequel le ou chaque élément de support de queue comprend une came prévue à une extrémité de celui-ci.

29. Dispositif de protection de queue selon la revendication 27 ou 28, dans lequel le dispositif de protection de queue comprend au moins une branche de support comportant des moyens pour un raccordement de la branche de support à la ou à chaque came de sorte qu'un mouvement latéral de la branche de support aboutit à un mouvement en arc de la came.

30. Dispositif de protection de queue selon l'une quelconque des revendications 28 ou 29, dans lequel le dispositif de protection de queue comprend une pluralité d'éléments de support de queue, chaque élément de support de queue ayant une came montée solidement sur celui-ci de sorte que le mouvement en arc de la came aboutit à un mouvement des éléments de support de queue entre la position de rangement et la position d'utilisation.

31. Dispositif de protection de queue selon l'une quelconque des revendications 28 à 30, dans lequel le dispositif de protection de queue comprend des moyens de liaison raccordant le levier à la ou à chaque came.

32. Dispositif de protection de queue selon la revendication 31, dans lequel les moyens de liaison comprennent une branche de support à laquelle la ou chaque came est raccordée par au moins un bras de came.

33. Dispositif de protection de queue selon la revendication 31 ou 32, dans lequel les moyens de liaison comprennent en outre une barre de liaison, la barre de liaison comportant au moins une cheville pouvant être mise en prise dans une fente prévue sur la branche de support.

34. Dispositif de protection de queue selon la revendication 33, dans lequel la cheville est mobile à l'intérieur de la fente de sorte que quand le levier est actionné, la barre de liaison se déplace forcément, provoquant ainsi un mouvement de ladite au moins une cheville dans la fente.

35. Dispositif de protection de queue selon la revendication 34, dans lequel un mouvement de la cheville dans la fente de la branche de support aboutit à un mouvement latéral de la branche de support et à un mouvement correspondant des bras de came et de la came, aboutissant ainsi à un mouvement des éléments de support de queue entre la position de rangement et la position d'utilisation.

36. Dispositif de protection de queue selon l'une quelconque des revendications 33 à 35, dans lequel ladite au moins une fente est prévue dans la branche de support sous un angle de 45° par rapport à l'horizontale.

37. Dispositif de protection de queue selon la revendication 1, dans lequel les moyens pour déplacer ledit au moins un élément de support de queue entre la position de rangement et la position d'utilisation comprend des moyens de liaison raccordant le levier à une branche de support comportant des moyens pour transférer un mouvement de la branche de support audit au moins un élément de support de queue de façon à provoquer un mouvement de celui-ci.

38. Dispositif de protection de queue selon la revendication 37, dans lequel les moyens de liaison comprennent une barre de liaison raccordée solidement à une extrémité de celle-ci au levier de sorte que l'actionnement du levier provoque un mouvement de la barre de liaison, la barre de liaison comportant au moins une cheville prévue vers l'autre extrémité de celle-ci, ladite au moins une cheville pouvant être mise en prise par coulissement dans au moins une fente correspondante prévue dans la branche de support, de manière à ce que le mouvement de la barre de liaison provoque un mouvement de la branche de support.

39. Dispositif de protection de queue selon la revendication 37, dans lequel les moyens pour transférer un mouvement comprennent un agencement à crémaillère et pignon.

40. Dispositif de protection de queue selon la revendication 37, dans lequel les moyens pour transférer un mouvement comprennent un agencement de cames.

41. Dispositif de protection de queue selon l'une quelconque des revendications précédentes, comprenant des moyens de sollicitation pour solliciter les éléments de support de queue dans la position de stockage après avoir été dans la position d'utilisation.

42. Dispositif de protection de queue selon la revendication 41, dans lequel les moyens de sollicitation sont prévus en association avec le levier.

43. Dispositif de protection de queue selon l'une quelconque des revendications précédentes, dans lequel le dispositif de protection de queue est formé à partir d'une matière plastique, de préférence ayant des propriétés élastiques.
